# EUROPÄISCHE PATENTSCHRIFT

(11) **EP 3 278 444 B1**
(45) Veröffentlichungstag und Bekanntmachung des Hinweises auf die Patenterteilung: **16.10.2019**
(21) Anmeldenummer: 16714233.0
(22) Anmeldetag: 31.03.2016
(51) Int. Cl.: H02N 2/00, H02N 2/06, H02N 2/14

(54) **VERFAHREN ZUR STEUERUNG EINES ULTRASCHALLMOTORS UND ENTSPRECHENDE STEUERANORDNUNG**
METHOD FOR CONTROLLING AN ULTRASOUND MOTOR AND CORRESPONDING CONTROL ARRANGEMENT
PROCÉDÉ DE COMMANDE D'UN MOTEUR À ULTRASONS ET ENSEMBLE DE COMMANDE CORRESPONDANT

(30) Priorität: 31.03.2015 DE 102015004208
(43) Veröffentlichungstag der Anmeldung: 07.02.2018
(73) Patentinhaber: Physik Instrumente (PI) GmbH & Co. KG, 76228 Karlsruhe (DE)
(72) Erfinder: WISCHNEWSKIY, Wladimir, 14712 Rathenow (DE); WISCHNEWSKI, Alexej, 76744 Wörth (DE)
(74) Vertreter: Schatt, Markus F.
(86) Internationale Anmeldenummer: PCT/EP2016/000538
(87) Internationale Veröffentlichungsnummer: WO 2016/155882

(56) Entgegenhaltungen:
- EP-A1- 0 602 635
- JP-A- 2010 252 422
- US-A1- 2007 108 870

## Beschreibung

Die Erfindung betrifft ein Verfahren zur Steuerung eines Ultraschallmotors und eine entsprechende Steueranordnung. Das erfindungsgemäße Verfahren und die entsprechende Steueranordnung ist für Ultraschallmotoren bzw. für deren Anwendungen vorgesehen, in denen eine genaue Bewegungsgeschwindigkeit und eine hohe Positioniergenauigkeit bei extrem niedrigen Bewegungsgeschwindigkeiten gefordert sind.

Entsprechende Anwendungen finden sich im Bereich der Mikroskopiertische bzw. der Verstelltische, der optischen und laserfocusierenden Systeme, allgemein im Bereich der Positioniersysteme..

Bekannt sind ein Verfahren und eine Anordnung zur Steuerung von Ultraschallmotoren (z. B. EP 2 095 441 B1, US 8 604 665 B2, JP 2010 252422 A, US 2007/108870 A1), bei denen der Ultraschallaktor des Ultraschallmotors auf seiner mechanischen Resonanzfrequenz arbeitet und bei der die Geschwindigkeits- oder die Lagesteuerung durch Änderung der Amplitude der Anregungsspannung erfolgt.

Der Nachteil dieses bekannten Verfahrens und der entsprechenden Steueranordnung besteht darin, dass bei der mechanischen Resonanzfrequenz der Widerstand der mechanischen Induktivität Lm des Ultraschallaktors des Ultraschallmotors durch den Widerstand Cm seiner mechanischen Kapazität kompensiert wird. Dies folgt aus der physikalischen Definition der mechanischen Resonanz des Ultraschallaktors.

Bei einer derartigen Kompensation stellen die Änderung des mechanischen Widerstandes des Friktionskontaktes, die Rückwirkung des Abtriebs oder die Rück-wirkung durch die Halterung des Aktors den destabilisierenden Hauptfaktor für die Stabilität der Bewegungsgeschwindigkeit und für die Positioniergenauigkeit des Ultraschallmotors dar. Das macht sich besonders bei niedrigen (10...1 µm/s) und extrem niedrigen (0,1...10 µm/s) Bewegungsgeschwindigkeiten bemerkbar.

Bei niedrigen Bewegungsgeschwindigkeiten des angetriebenen Elements des Ultraschallmotors können die Schwingungen des mechanischen Widerstandes des Friktionskontaktes Werte erreichen, die +/- (10...50)% um den Mittelwert schwanken. Diese Schwingungen wirken sich direkt auf die Schwingungen der Bewegungsgeschwindigkeit und dementsprechend auf die Positioniergenauigkeit aus. Die Schwingungen der Geschwindigkeit können Werte im Bereich von +/-(10...50)% annehmen, und die Positioniergenauigkeit liegt bei +/- 0,1 µm.

Um eine maximale Stabilität der Bewegungsgeschwindigkeit und eine maximale Positioniergenauigkeit zu erreichen, wird versucht, die Änderung des mechanischen Widerstandes des Friktionskontaktes zu verringern. Das erfolgt durch Präzisionsbearbeitung der Friktionsschiene des Ultraschallmotors und durch Präzisionsbearbeitung des Friktionselements des Ultraschallaktors mittels Schleifen und Polieren.

Da sowohl die Friktionsschiene als auch das Friktionselement aus extrem harten Werkstoffen gefertigt werden, erschwert dies wesentlich die Herstellungstechnologie der Ultraschallmotoren und verteuert diese. Dadurch werden auch die mit Ultraschallmotoren ausgestatten und in Geräten mit niedrigen und extrem niedrigen Bewegungsgeschwindigkeiten eingesetzten hochpräzisen Antriebssysteme komplexer und teurer.

Aufgabe der Erfindung ist ein Verfahren zur Steuerung eines Ultraschallmotors und eine Steueranordnung für einen Ultraschallmotor bereit zu stellen, mit dem bzw. mit der eine höhere Stabilität bzw. größere Konstanz der Bewegungsgeschwindigkeit und eine höhere Positioniergenauigkeit des angetriebenen Elements des Ultraschallmotors insbesondere bei niedrigen und sehr niedrigen Bewegungsgeschwindigkeiten erreicht wird.

Diese Aufgabe wird mit den Merkmalen der unabhängigen Ansprüche gelöst. Weitere Ausführungsformen sind in den auf diese jeweils rückbezogenen Unteransprüchen angegeben.

Erfindungsgemäß wird ein Verfahren zur Steuerung der Bewegungsgeschwindigkeit oder der Lage eines angetriebenen Elements eines Ultraschallmotors unter Nutzung des Signals eines Geschwindigkeitgebers und/oder eines Lagegebers bereit gestellt, wobei der Ultraschallmotor einen Ultraschallaktor mit wenigstens zwei Generatoren für akustische Wellen umfasst, wobei entweder einer der Generatoren oder beide Generatoren mit einer elektrischen Anregungsspannung beaufschlagt wird oder werden.

Das erfindungsgemäße Verfahren weist insbesondere die folgenden Schritte auf:
- ausgehend von einer Startgeschwindigkeit oder einer Startlage des angetriebenen Elements Einstellen der Frequenz fu der elektrischen Anregungsspannung dergestalt, dass diese gleich der mechanischen Resonanzfrequenz frm des Ultraschallaktors ist oder nahe bei dieser liegt;
- Änderung der Frequenz fu der elektrischen Anregungsspannung unter Nutzung des Signals des Geschwindigkeitsgebers und/oder des Lagegebers hin zur Antiresonanzfrequenz fa des Ultraschallaktors solange, bis eine Endgeschwindigkeit oder eine Endlage des angetriebenen Elements erreicht ist;
- Regeln der Endgeschwindigkeit oder der Endlage des angetriebenen Elements mit einer vorgegebenen Genauigkeit mittels gegenphasiger Frequenzänderung.

Nach einer Ausführungsform des erfindungsgemäßen Verfahrens ist vorgesehen, dass zusätzlich beim Erreichen der Endgeschwindigkeit oder der Endlage des angetriebenen Elements die Geschwindigkeit oder die Lage des angetriebenen Elements gesteuert wird oder mit Hilfe eines Amplitudenreglers eine Spannung eingestellt wird, die einen der ersten oder zweiten Generatoren für akustische Wellen anregt.

Nach einer Ausführungsform des erfindungsgemäßen Verfahrens ist vorgesehen, dass die Frequenz fu der elektrischen Anregungsspannung von einem unabhängigen elektrischen Generator vorgegeben wird. Alternativ dazu kann auch vorgesehen sein, dass die Frequenz fu der elektrischen Anregungsspannung mit einem selbsterregenden Oszillator erzeugt wird, dessen frequenzgebendes Element einen Geber für die mechanische Verformung des Aktors darstellt. Dabei kann auch vorgesehen sein, dass die Änderung der Frequenz fu der elektrischen Anregungsspannung durch Einflussnahme auf die Größe der Phasenverschiebung innerhalb eines Phasenschieberelements des selbsterregenden Oszillators erfolgt.

Nach einer Ausführungsform des erfindungsgemäßen Verfahrens ist vorgesehen, dass der selbsterregende Oszillator nach dem Prinzip der Frequenzproportionalsteuerung arbeitet.

Nach einer Ausführungsform des erfindungsgemäßen Verfahrens ist vorgesehen, dass ein Regler für die Geschwindigkeit und/oder die Lage des angetriebenen Elements nach dem Prinzip der PID-Frequenzregelung arbeitet.

Bei einer Ausführungsform des Verfahrens, bei der die Änderung der Frequenz fu der elektrischen Anregungsspannung durch Einflussnahme auf die Größe der Phasenverschiebung innerhalb eines Phasenschieberelements des selbsterregenden Oszillators erfolgt, kann vorgesehen sein, dass als Signal für den Geber für die mechanische Verformung des Aktors eine Spannung verwendet wird, die von einem elektrisch nicht erregten Generator für akustische Wellen oder durch eine an dem Aktor angeordnete Zusatzelektrode oder durch ein zusätzliches an dem Aktor angeordnetes Piezoelement erzeugt wird.

Nach einer Ausführungsform des erfindungsgemäßen Verfahrens ist vorgesehen, dass an jedem der Generatoren für akustische Wellen eine elektrische Anregungsspannung gleicher Frequenz angelegt wird. Dabei kann vorgesehen sein, dass zwischen den an die Generatoren angelegten Anregungsspannungen eine Phasenverschiebung um einen beliebigen Winkel im Bereich von Null bis +/-180° besteht, und der Phasenverschiebungswinkel vorzugsweise +/-90° beträgt. Alternativ dazu kann vorgesehen sein, dass kann vorgesehen sein, dass die Amplitude der an einen der Generatoren für akustische Wellen angelegten Anregungsspannung mit einem Amplitudenregler geregelt wird.

Nach einem weiteren Aspekt der Erfindung ist ein Verfahren vorgesehen, wobei Merkmale desselben auch Merkmale einer oder mehrerer der vorgenannten Ausführungsformen ersetzen können und wobei das Verfahren zur Steuerung eines angetriebenes Elements eines Ultraschallmotors von einem ersten Stellzustand in einen zweiten Stellzustand vorgesehen ist und die folgenden Schritte aufweist:
(a) in dem ersten Stellzustand des angetriebenes Elements Einstellen der ersten Spannung U1 mit einer Frequenz fu an den ersten Generator, die gleich ist der mechanischen Resonanzfrequenz des ersten Generators oder in der Nähe der mechanischen Resonanzfrequenz des ersten Generators liegt,
(b) Änderung der Frequenz fu der ersten Spannung U1 in eine Richtung, bei der sich der Gesamtstrom lu des Ultraschallaktors verringert, bis zum Erreichen des zweiten Stellzustands des angetriebenen Elements und
(c) nach einem Ermitteln, dass das angetriebene Element den zweiten Stellzustand erreicht hat, Stabilhalten des zweiten Stellzustands des angetriebenen Elements durch eine Regelschleife, bei der eine erfasste Abweichung des momentanen Stellzustands vom zweiten Stellzustand durch Veränderung eines oder beider der folgenden Maßnahmen reduziert wird:
   (c1) Änderung der Frequenz der ersten Spannung U1 relativ zur Frequenz der zweiten Spannung U2,
   (c2) Änderung der Amplitude der ersten Spannung U1 relativ zur Amplitude der zweiten Spannung U2.

Bei diesen Verfahrensschritten kann vorgesehen sein, dass im Schritt (a) die zweite Spannung U2 konstant ist oder die zweite Spannung U2 mit derselben Amplitude und Frequenz fu eingestellt ist wie die erste Spannung U1.Weiterhin kann bei diesen Verfahrensschritten kann vorgesehen sein, dass der Stellzustand die Geschwindigkeit oder die Stellposition des angetriebenen Elements oder sowohl die Geschwindigkeit als auch die die Stellposition des angetriebenen Elements beinhaltet,

Nach einem weiteren Aspekt der Erfindung ist eine Steueranordnung für einen Ultraschallmotor vorgesehen, der Ultraschallmotor umfassend einen Ultraschallaktor mit wenigstens zwei Generatoren für akustische Wellen, ein angetriebenes Element und einen Generator für eine elektrische Anregungsspannung, wobei der Generator für eine elektrische Anregungsspannung eine Frequenznachführung aufweist, deren Ausgang mit einem Leistungsverstärker und deren Eingang mit einem Regler für die Bewegungsgeschwindigkeit oder für die Lage des angetriebenen Elements verbunden ist.

Erfindungsgemäß kann der Ultraschallaktor insbesondere aufweisen: einen Ultraschallaktor mit zumindest einer Gruppe von jeweils zumindest zwei Generatoren zur Erzeugung von akustischen Wellen, mit einer an den zwei Generatoren angeschlossenen elektrischen Erregervorrichtung zum Anlegen einer ersten Spannung U1 und einer zweiten Spannung U2 an jeweils einen der Generatoren, mit einem Friktionselement, das zwischen zwei Generatoren jeweils einer Gruppe von Generatoren gelegen und mit jedem der zwei Generatoren jeweils einer solchen Gruppe gekoppelt ist, um die Bewegung des Friktionselements durch die zwei Generatoren der jeweiligen Gruppe von Generatoren zu steuern, ein angetriebenes Element, das an dem Friktionselement anliegt, um von diesem angetrieben zu werden.

Nach einer Ausführungsform der Steueranordnung kann vorgesehen sein, dass diese zusätzlich einen Amplitudenregler der elektrischen Anregungsspannung enthält, dessen Eingang mit dem Regler für die Bewegungsgeschwindigkeit oder der Lage des angetriebenen Elements verbunden ist.

Nach einer Ausführungsform der Steueranordnung kann vorgesehen sein, dass diese einen Phasendetektor enthält, dessen erster Eingang mit einem Geber für die mechanischen Verformungen des Aktors und dessen zweiter Eingang mit dem Ausgang des Leistungsverstärkers verbunden ist. Dabei kann die Steueranordnung derart ausgeführt sein, dass als Geber für die Verformung des Aktors ein elektrisch nicht erregter Generator für akustische Wellen oder eine Zusatzelektrode oder ein an dem Aktor angeordnetes Piezoelement verwendet wird.

Nach einer Ausführungsform der Steueranordnung kann vorgesehen sein, dass für die Frequenznachführung ein geregelter Phasenschieber verwendet wird, der einen elektrisch geregelten Widerstand, einen elektrisch geregelten Kondensator oder einen elektrisch geregelten Digitalphasenschieber aufweist.

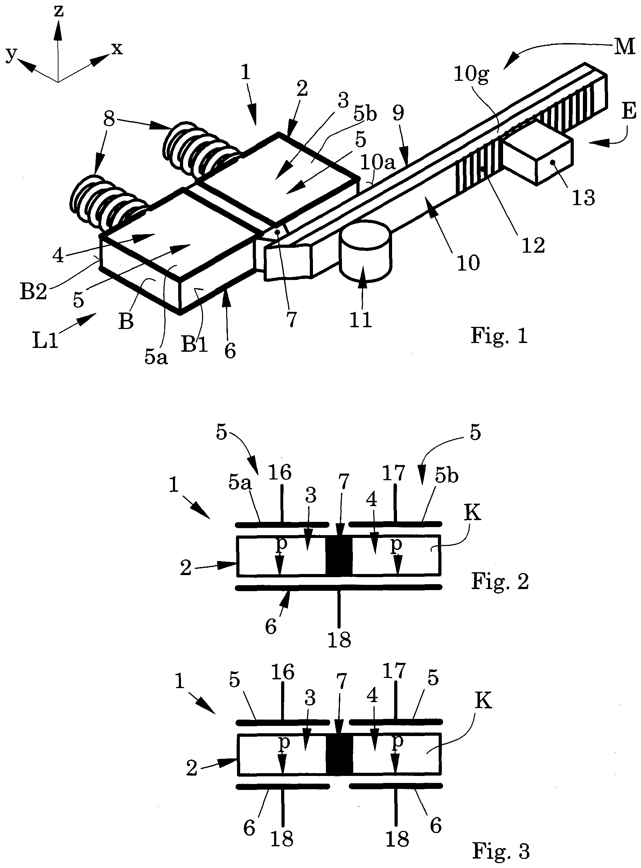

Figur 1 zeigt eine mögliche Ausführungsform für einen Ultraschallmotor zur Anwendung des erfindungsgemäßen Verfahrens. Der Ultraschallmotor M weist generell auf:
- einen Ultraschallaktor 1, der aufweist:
   - zumindest eine Gruppe von jeweils zwei Generatoren 3, 4 zur Erzeugung von Schallwellen und insbesondere Ultraschallwellen, mit einer an den Generatoren 3, 4 elektrisch angeschlossenen Ansteuerungsvorrichtung zum Anlegen einer ersten Spannung U1, definiert durch eine jeweilige Frequenz und jeweilige Amplitude, und/oder einer zweiten Spannung U2, definiert durch eine jeweilige Frequenz und eine jeweilige Amplitude, an jeweils einen der Generatoren 3, 4;
   - ein Friktionselement 7, das zwischen den Generatoren 3, 4 jeweils einer Gruppe von Generatoren 3, 4 gelegen und mit jedem der Generatoren 3, 4 jeweils einer solchen Gruppe gekoppelt ist, um die Bewegung des Friktionselements 7 durch die eine mechanische Verformung der Generatoren 3, 4 der jeweiligen Gruppe von Generatoren aufgrund der Ansteuerung mit der ersten Spannung U1 und/oder der zweiten Spannung U2 zu steuern,
- eine Rahmenvorrichtung (in den Figuren nicht gezeigt), die als ein Gehäuse oder eine Halterung ausgeführt sein kann und in der der Ultraschallaktor 1 angeordnet ist,
- eine an oder in der Rahmenvorrichtung angeordnete Führungsvorrichtung 11,
- ein angetriebenes Element 10, das an dem Friktionselement 7 anliegt, um von diesem angetrieben zu werden,
- eine Sensorvorrichtung E zur Erfassung des Stellzustands des angetriebenes Elements 10,
- die Ansteuerungsvorrichtung, die mit der Sensorvorrichtung E funktional gekoppelt ist.

Der Generator, der mit dem Bezugszeichen "3" bezeichnet ist, wird im Folgenden teilweise auch als "erster Generator" bezeichnet. In analoger Weise wird der Generator, der mit dem Bezugszeichen "4" bezeichnet ist, wird im Folgenden teilweise auch als "zweiter Generator" bezeichnet.

Der Ultraschallaktor 1 erzeugt in Abhängigkeit einer elektrischen Anregungsspannung, die durch die erste Spannung U1 oder die zweite Spannung U2 oder sowohl durch die erste Spannung als auch durch die zweite Spannung U2 gebildet sein kann, auf eindeutige Weise eine vorbestimmte zeitabhängige Verformung des ersten Generators 3 und des zweiten Generators 4 und insbesondere der Betätigungsschicht B sowie insbesondere eine zeitabhängige Verformung zumindest an einer ersten Längsseitenfläche B1, an der das mit dem angetriebenen Element 10 in Kontakt stehende Friktionselement 7 befestigt ist. Mit der erfindungsgemäßen Lösung versetzt das Friktionselement 7 in Abhängigkeit des zeitlichen Bewegungsverlaufs der ersten Längsseitenfläche B1 des Ultraschallaktors 1 das angetriebene Element 10 von dem ersten Stellzustand (Startgeschwindigkeit und/oder Startlage) in den zweiten Stellzustand (Endgeschwindigkeit und/oder Endlage).

Jeder Generator 3, 4 kann insbesondere zumindest ein Paar von beabstandet zueinander gelegenen und von der Ansteuerungsvorrichtung elektrisch angesteuerte Elektroden und eine Betätigungsschicht B mit der ersten Längsseitenfläche B1 aufweisen, die an oder zwischen oder an und zwischen dem jeweiligen Paar von beabstandet zueinander gelegenen Elektroden gelegen sind, so dass durch Anlegen einer ersten Spannung U1 und/oder einer zweiten Spannung U2 an die jeweilige Elektrode bzw. das jeweilige Paar von Elektroden eine vorbestimmte zeitabhängige Verformung der Betätigungsschicht B erfolgt. Die Betätigungsschicht B erstreckt sich über beide Generatoren 3, 4 der Gruppe von jeweils zwei Generatoren 3, 4. Die elektrische Anregungsspannung wird durch eine elektrisch mit dem Ultraschallaktor 1 verbundenen Ansteuerungsvorrichtung erzeugt, um die Stellzustandsänderung des angetriebenen Elements 10 vorzunehmen.

Bei der Ausführungsform des Ultraschallmotors M, bei der das Friktionselement 7 an der ersten Längsseitenfläche B1 und zwischen jeweils zwei Generatoren 3, 4 angeordnet ist, können durch jeweilige Ansteuerung des ersten Generators 3 und/oder des zweiten Generators 4 in spezifischer Weise eine vorbestimmte Verformung der ersten Längsseitenfläche B1 und somit eine vorbestimmte Bewegung des Friktionselement 7 realisiert werden.

Die Rahmenvorrichtung, der Ultraschallaktor 1 und die Führungsvorrichtung 11 können derart gestaltet und relativ zueinander gelegen sein, dass diese das angetriebene Element 10 zwischen dem Friktionselement 7 des Ultraschallaktors 1 und der Führungsvorrichtung 11 bewegbar halten. Der Ultraschallaktor 1 erzeugt dabei einen Wellenverlauf mit einer durch eine Ansteuerungsvorrichtung eingestellten Frequenz an der Längsseitenfläche des Ultraschallaktors 1, wodurch eine Änderung des Stellzustands des an dem Friktionselement 7 anliegenden Elements 10 von einem ersten Stellzustand zu einem zweiten Stellzustand erreicht wird.

Der Ultraschallaktor 1 ist als Piezoelement ausgebildet, wobei das Piezoelement in der in der Figur 1 gezeigten Ausführungsform als piezoelektrische Platte 2 ausgeführt sein kann, die sich in einer Längsrichtung L1 der piezoelektrischen Platte 2 oder des Ultraschallaktors 1 erstreckt. Das Piezoelement kann auch anders gestaltet sein und z.B. zylindrisch, halbzylindrisch oder quaderförmig gebildet sein. Die Längsrichtung L1 verläuft in Richtung einer X-Achse eines kartesischen Koordinatensystems mit der X-Achse, einer Y-Achse, die eine Querrichtung definiert, und einer Z-Achse, die eine Dickenrichtung des definiert.

Der Ultraschallaktor 1 und insbesondere die piezoelektrische Platte 2 weist zwei Generatoren 3, 4 zur Erzeugung von akustischen Wellen an der ersten Längsseitenfläche B1 des Ultraschallaktors 1, an der das angetriebene Element 10 anliegt, zum Antreiben des angetriebenen Elements 10 auf. Die zwei Generatoren 3, 4 bilden das Piezoelement bzw. die piezoelektrische Platte 2. Die Gruppe von Generatoren 3, 4 ist in der in der Figur 1 dargestellten Ausführungsform durch zwei Erregerelektroden 5, also eine erste Erregerelektrode 5a und eine zweite Erregerelektrode 5b, und eine allgemeine Elektrode 6 sowie eine zwischen diesen gelegene Betätigungsschicht B gebildet. Bei der Ausführungsform des Ultraschallaktors 1 nach der Figur 1 sind die erste und die zweite Erregerelektrode 5a, 5b in der Längsrichtung L1 gesehen hintereinander angeordnet und erstreckt sich die Betätigungsschicht B entlang der Längsrichtung L1 und entlang der ersten und die zweiten Erregerelektrode 5a, 5b und der allgemeinen Elektrode 6 sowie zwischen diesen. Mit Pfeilen und dem Index p ist die jeweilige Polarisationsrichtung angegeben.

Die Betätigungsschicht B kann insbesondere aus einer piezoelektrischen Keramikgebildet sein. Die Betätigungsschicht B weist eine erste Längsseitenfläche B1 und eine zweite Längsseitenfläche B2 auf, die entgegen gesetzt zueinander gelegen und entgegen bzw. in einer Richtung orientiert sind, die jeweils entlang der Y-Richtung verläuft. Die Längsseitenflächen B1, B2 können, wie es in der Figur 1 gezeigt ist, entlang der Längsrichtung L1 verlaufen. Zumindest eine der Längsseitenflächen B1, B2 kann eine Längsseitenfläche des Ultraschallaktors 1 sein, an der das angetriebene Element 10 anliegt und an der ein Wellenverlauf mit einer Resonanzfrequenz zum Antreiben des angetriebene Elements 10 erzeugbar ist.

Das angetriebene Element 10 weist eine Antriebsoberfläche 10a auf, die der piezoelektrischen Platte 2 zugewandt gelegen ist und an der eine der Antriebsoberfläche 10a zugewandte und an dieser anliegende Kontaktfläche des Friktionselement 7 anliegt. Das angetriebene Element 10 kann aus einem Grundkörper 10g und einer Friktionsschicht 9 gebildet sein, deren dem Friktionselement 7 oder der piezoelektrischen Platte 2 zugewandte Oberfläche die Antriebsoberfläche 10a bildet. Generell kann das angetriebene Element 10 länglich und, wie es in der Figur 1 gezeigt ist, insbesondere stabförmig gebildet sein. Das angetriebene Element 10 ist durch sein Material oder seine Gestalt an der AntriebsOberfläche, die dem Friktionselement 7 zugewandt gelegen ist, oder durch beide dieser Eigenschaften derart ausgeführt, dass die durch die Wellen, die aufgrund der elektrischen Anregung des Ultraschallaktor 1 im Resonanzbereich von diesem an der piezoelektrischen Platte 2 erzeugt werden, vorteilhaft und effizient auf das angetriebene Element 10 übertragen wird.

Das angetriebene Element 10 des Ultraschallmotors M ist in oder an der Führungsvorrichtung 11 geführt, die derart ausgeführt ist, dass das angetriebene Element 10 entlang der Längsrichtung L1 relativ zu diesem bewegbar ist. Wie in der Figur 1 dargestellt ist, kann die Führungsvorrichtung 11 aus einer an der Rahmenvorrichtung angeordneten Rolle gebildet sein, die an der Rahmenvorrichtung drehbar oder nicht drehbar gelagert ist und an der das angetriebene Element 10 anliegt. Die Führungsvorrichtung 11 kann auch aus mehreren an der Rahmenvorrichtung angeordneten Rollen gebildet sein, an denen das angetriebene Element 10 anliegt. Die Führungsvorrichtung 11 kann z.B. auch in Form einer Führungsbahn ausgebildet sein (nicht gezeigt), die an der Rahmenvorrichtung angebracht oder Teil derselben sein kann und durch die das angetriebene Element 10 bei seiner Bewegung entlang der Längsrichtung L1 geführt ist.

Das Friktionselement 7 des Ultraschallmotors M ist an einer Längsseitenfläche B1, B2 der Kernschicht K angeordnet. Dabei kann das Friktionselement 7 an der ersten oder der zweiten Längsseitenfläche B1, B2 befestigt und z.B. angeklebt sein. Bei der in der Figur 1 dargestellten Ausführungsform ist das Friktionselement 7 an der ersten Längsseitenfläche B1 angeordnet, die bei der dargestellten Ausführungsform entgegen der Y-Richtung orientiert ist. Dabei kann, wie es in der Figur 1 gezeigt ist, vorgesehen sein, dass das Friktionselement 7 zumindest teilweise in einem Bereich angeordnet ist, der in der Längsrichtung L1 gesehen zwischen der ersten Erregerelektrode 5a und der zweiten Erregerelektrode 5b gelegen ist.

Das Friktionselement 7 weist eine Friktionsoberfläche 75 auf, die der Antriebsoberfläche 10a des angetriebenen Elements 10 zugewandt gelegen ist und an dieser anliegt, insbesondere um die Antriebsoberfläche 10a des angetriebenen Element 10 zu bewegen.

Der Ultraschallaktor 1 kann in der Rahmenvorrichtung fixiert sein, so dass keine Bewegung des Ultraschallaktors 1 in der Rahmenvorrichtung zugelassen ist. Dabei ist die Rahmenvorrichtung und der Ultraschallaktor 1 derart gestaltet, dass das Friktionselement 7 des Ultraschallmotors M an das angetriebene Element 10 drückt. Alternativ dazu kann der Ultraschallaktor 1 in der Rahmenvorrichtung bewegbar gelagert sein, wobei der Ultraschallaktor 1 quer zur Erstreckungsrichtung der Antriebsoberfläche 10a des angetriebenen Elements 10, also entlang der Y-Richtung bewegbar gelagert ist. Bei dieser Ausführungsform ist vorgesehen, dass der Ultraschallmotor M eine Vorspannvorrichtung 8 aufweist, mit der das Friktionselement 7 des Ultraschallaktors 1 an die Antriebsoberfläche 10a des angetriebenen Elements 10 angedrückt wird. Die Vorspannvorrichtung 8 kann, wie es in der Figur 1 gezeigt ist, durch zwei Federn und generell durch zumindest eine Feder oder ein Federelement gebildet sein. Somit wird das Friktionselement 7 mittels der Vorspannvorrichtung 8 an die Friktionsschicht 10 des in der Führungsvorrichtung 11 gelagerten angetriebenen Elements 10 gepresst.

Der Ultraschallmotor M weist weiterhin eine Sensorvorrichtung E auf, mit der der Stellzustand, also die Bewegungsgeschwindigkeit und/oder die Lage des angetriebenen Elements 10 erfasst werden kann. Die Sensorvorrichtung E kann, wie es in der Figur 1 gezeigt ist, eine an dem angetriebenen Element 10 angeordnete Messskala 12 und einen Geschwindigkeitsgeber oder Lagegeber 13 aufweisen, der jeweils mit Hilfe der Messskala 12 die Geschwindigkeit oder die Position bzw. die Lage des angetriebenen Elements 10 oder beide ermittelt.

Die Figuren 2 und 3 zeigen jeweils schematisch eine Ausführungsform eines Ultraschallaktors 1 für den Ultraschallmotor M gemäß Figur 1. Nach Figur 2 hat der Ultraschallaktor 1 eine allgemeine Elektrode 6, während der Ultraschallaktor nach Figur 3 zwei allgemeine Elektroden 6 aufweist.

Die Polarisationsrichtung der Piezokeramik des Piezoelementes des Ultraschallaktors 1 ist normal zu den Erregerelektroden 5 und den allgemeinen Elektroden 6 gerichtet. In den Figuren ist die Polarisationsrichtung mit Pfeilen und dem Index p angegeben.

Die Erregerelektroden 5 der ersten Generatoren 3 haben die Ausgänge 16, die Erregerelektroden 5 der zweiten Generatoren 4 die Ausgänge 17, die allgemeinen Elektroden 6 die Ausgänge 18.

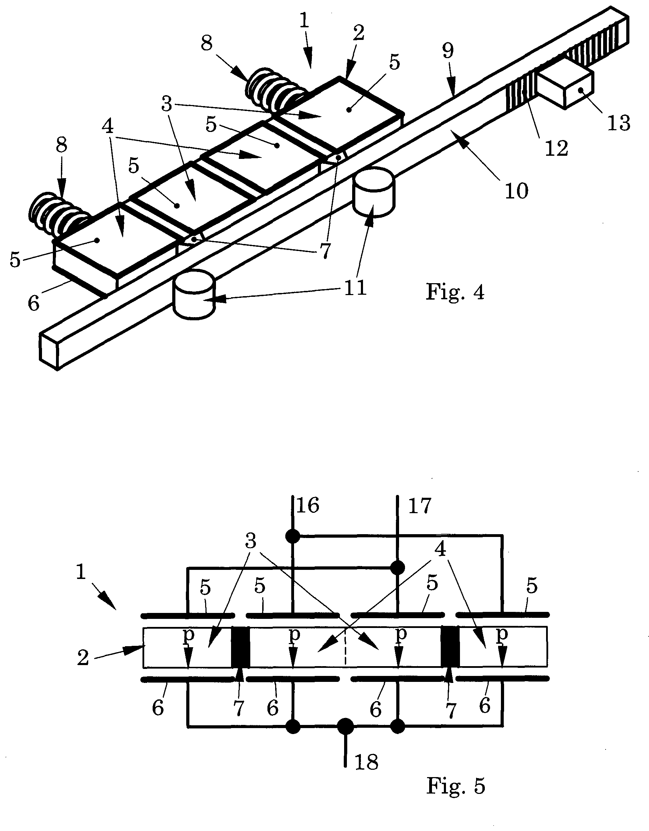

Figur 4 zeigt eine weitere mögliche Ausführungsform eines Ultraschallmotors M, der einen Ultraschallaktor 1 in Form eines dualen Aktors aufweist. Dieser duale Aktor enthält zwei Friktionselemente 7 und zwei Paar unterteilter Erregerelektroden 5 und allgemeiner Elektroden 6.

Figur 5 zeigt einen möglichen elektrischen Verbindungsplan für die Erregerelektroden 5 und die allgemeinen Elektroden 6 eines solchen dualen Aktors.

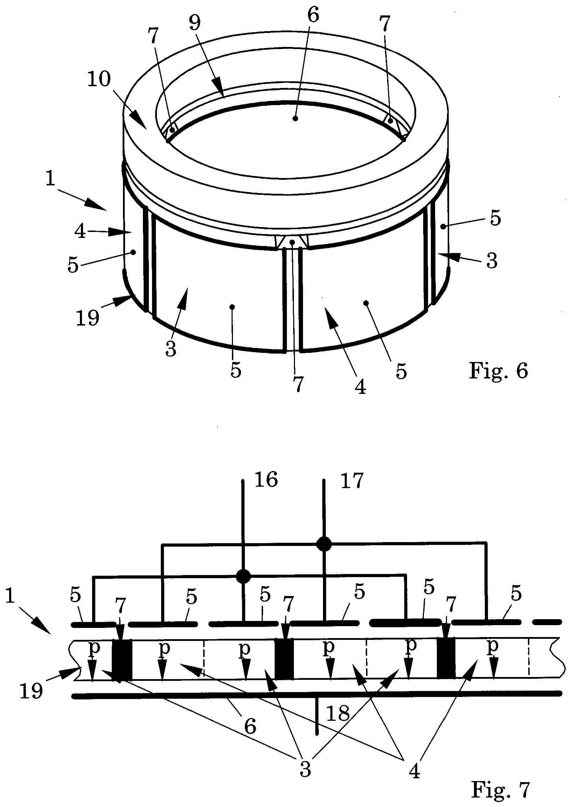

Figur 6 zeigt eine weitere Ausführungsform für einen Ultraschallmotor M. Dieser Ultraschallmotor M weist einen Ultraschallaktor 1 in Form eines dreifachen Aktors mit drei Friktionselementen 7, mit drei Paar Erregerelektroden 5 und mit einer allgemeinen Elektrode 6 auf. Das Piezoelement dieses dreifachen Aktors ist als piezoelektrischer Zylinder ausgeführt.

Figur 7 zeigt einen möglichen elektrischen Verbindungsplan für die Erregerelektroden 5 des dreifachen Aktors gemäß Figur 6.

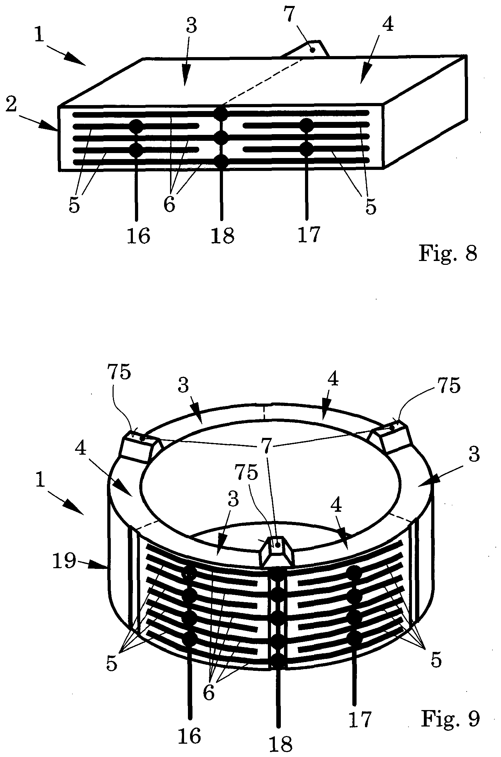

Figur 8 zeigt einen Ultraschallaktor 1 eines Ultraschallmotors M, dessen Piezoelement als piezoelektrische Platte 2 ausgeführt ist und bei der die Erregerelektroden 5 und die allgemeinen Elektroden 6 der ersten und zweiten Generatoren 3, 4 eine Multilayerstruktur aufweisen.

Figur 9 zeigt einen Ultraschallaktor 1 eines Ultraschallmotors M, dessen Piezoelement als piezoelektrischer Ring ausgeführt ist und bei der die Erregerelektroden 5 und die allgemeinen Elektroden 6 der ersten und zweiten Generatoren 3, 4 eine Multilayerstruktur aufweisen.

Figur 10 zeigt ein Anschlussschema des Ultraschallaktors 1 mit einer ein-phasigen elektrischen Erregervorrichtung 23.

Die Erregervorrichtung 23 stellt die erste Spannung U1 als elektrische Spannung mit der Frequenz fu bereit.

Figur 11 zeigt das elektrische Modell eines Ultraschallaktors 1 eines erfindungsgemäßen Ultraschallmotors, welches beschränkt ist auf seine elektrischen Komponenten. Das Modell enthält die elektrische Kapazität Co, die mechanische Kapazität Cm, die mechanische

Induktivität Lm, den mechanischen Verlustwiderstand im Aktor Rm und den mechanischen Verlustwiderstand im Friktionskontakt des Ultraschallmotors Rf. Der Strom lu stellt den durch den Ultraschallaktor 1 fließenden Gesamtstrom dar. Der Strom Im ist der durch den mechanischen Teil des Ultraschallaktors 1 fließende Strom. Der Strom Im verhält sich proportional zur Bewegungsgeschwindigkeit Va des angetriebenen Elements 10 des Ultraschallmotors.

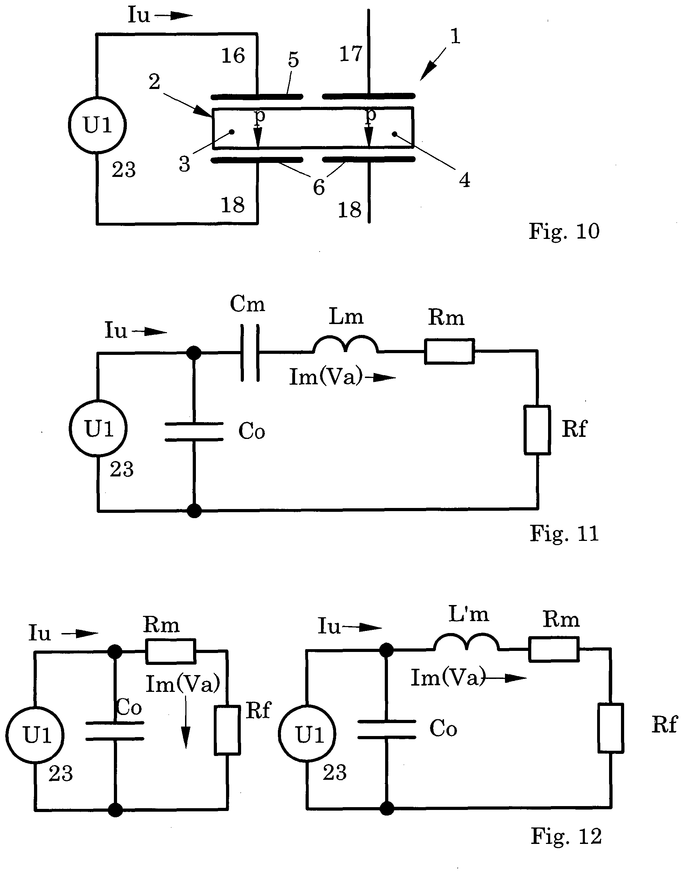

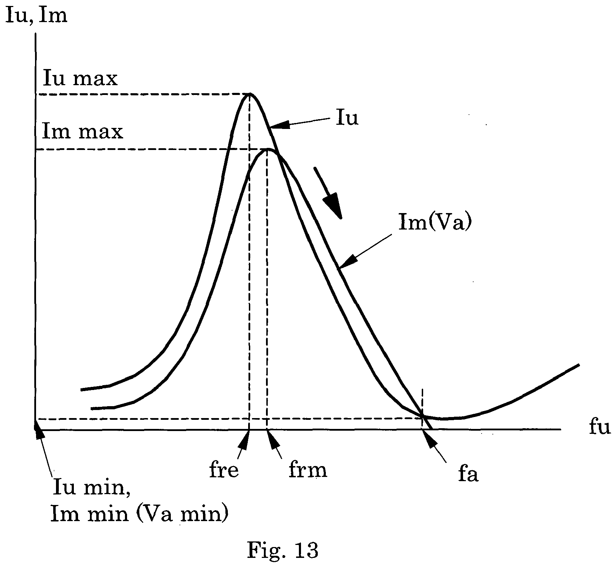

Figur 13 zeigt die Abhängigkeit des Gesamtstroms lu und des mechanischen Stroms Im von der Frequenz fu der durch die erste Spannung U1 bereitgestellten Anregungsspannung für die in Figur 11 dargestellte Schaltung.

Die erste Abhängigkeit weist ein Maximum lu max bei der elektrischen Resonanzfrequenz fe und ein Minimum lu min bei der elektrischen Antiresonanzfrequenz fa auf. Die zweite Abhängigkeit weist ein Maximum Im max bei der mechanischen Resonanzfrequenz frm auf. Die Frequenzen fe und fr unterscheiden sich nur wenig voneinander.

Ausgehend von den allgemeinen Darlegungen kann bewiesen werden, dass Cm etwa 10 Co beträgt und Rf im Bereich (10...100) Rm liegt.

Wenn die Frequenz fu gleich der mechanischen Frequenz frm des Ultraschallaktors 1 ist, so ist laut der Definition der Resonanz 2π fr Lm = 1/(2π fr Cm), d. h. der induktive Widerstand der mechanischen Induktivität Lm wird bei dieser Frequenz durch den induktiven Widerstand der Kapazität Cm kompensiert. Deshalb kann für den Fall der mechanischen Resonanzfrequenz frm die Schaltung in Figur 11 in die in Darstellung 25 von Figur 12 gezeigte Schaltung umgewandelt werden.

Aus der Schaltung in Darstellung 25 von Figur 12 ist erkennbar, dass bei einer Motorsteuerung nach den bekannten Verfahren und mit der bekannten Anordnung, bei der die Frequenz fu der durch die erste Spannung U1 bereitgestellten Anregungsspannung stets gleich der mechanischen Resonanzfrequenz frm ist, Schwingungen des mechanischen Widerstands des Friktionskontakts Rf hervorgerufen werden, die praktisch gleich den Schwingungen des Strom Im und der entsprechenden Bewegungsgeschwindigkeit Va des angetriebenen Elements 10 des Ultraschallmotors M sind.

Das bedeutet, dass sich bei einer Bewegung des angetriebenen Elements 10 und einer Änderung des Widerstands des Friktionskontakts um +/-10 %auch die Bewegungsgeschwindigkeit Va des angetriebenen Elements 10 um +/-10% ändert. Ändert sich der Widerstand des Friktionskontakts bei einer Bewegung des angetriebenen Elements 10 um +/- 50 %, ändert sich auch die Bewegungsgeschwindigkeit Va des angetriebenen Elements 10 um +/- 50%. Dabei hängen die Schwingungen der Geschwindigkeit Va nicht von der Amplitudenhöhe der durch die erste Spannung U1 bereitgestellten Anregungsspannung ab. Das bedeutet, dass bei Verwendung des bekannten Verfahrens und der bekannten Anordnung zur Steuerung eines Ultraschallmotors sowohl bei hohen als auch bei niedrigen Bewegungsgeschwindigkeiten des angetriebenen Elements 10 jeweils die gleiche Instabilität der Bewegungsgeschwindigkeit des angetriebenen Elements 10 auftritt.

In der vorgestellten Erfindung wird eine Steuerung der Bewegungsgeschwindigkeit des angetriebenen Elements 10 des Ultraschallmotorsmittels vorgeschlagen, die auf einer Abstimmung der Frequenz fu für die den Ultraschallaktor 1 ansteuernde Anregungsspannung beruht, wobei die Anregungsspannung durch die erste Spannung U1 bereitgestellt wird. Die Frequenzabstimmung erfolgt ausgehend von der mechanischen Resonanzfrequenz frm in Richtung der Antiresonanzfrequenz fa, in Figurur 13 mit Pfeil dargestellt.

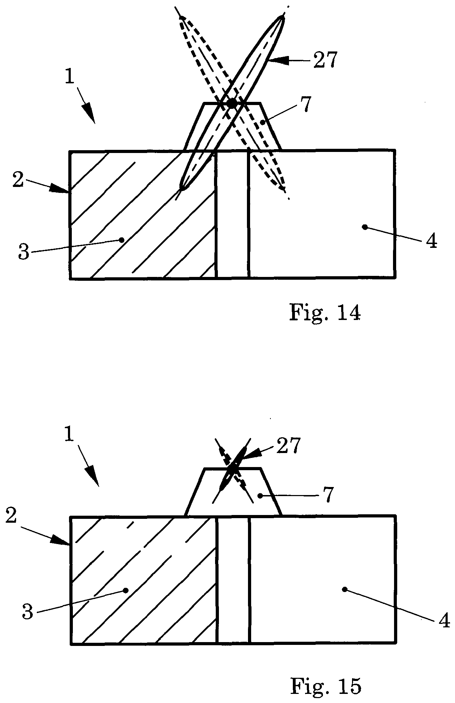

Bei der mechanischen Resonanzfrequenz frm bewegt sich das durch den ersten Generator 3 angesteuerte Friktionselement 7 auf einer lang gezogenen geneigten Bewegungsbahn 27, wie in Figur 14 dargestellt.

Bei einer Anregung des zweiten Generators 4 ändert die Bewegungsbahn 27 ihre Neigung, in Figur 14 mit punktierter Linie dargestellt.

Bei einer Änderung der Frequenz fu der durch die erste Spannung U1 bereitgestellten Anregungsspannung ausgehend von der mechanischen Resonanzfrequenz frm hin zur Antiresonanzfrequenz fa verringert die Bewegungsbahn 27 des sich bewegenden Friktionselementes 7 ihre Amplitude, wie in Figur 15 dargestellt.

Im Bereich der Antiresonanzfrequenz fa, kann die Schaltung aus Figur 11, in die in Darstellung von Figur. 12 gezeigte Schaltung umgewandelt werden.

Im Bereich der Antiresonanzfrequenz fa wird der Widerstand der mechanischen Induktivität nur teilweise durch den Widerstand der mechanischen Kapazität Cm kompensiert. Bei der Antiresonanzfrequenz fa verringert sich der Strom von lu max auf lu min, wobei das das Verhältnis von lu max zu lu min zwischen 100 und 300 liegt. Das heißt, dass sich bei der Frequenz fa ein in Reihe mit dem Widerstand Rf geschalteter induktiver Wider-stand der mechanischen Induktivität Lm bildet, der 100 bis 300-mal größer als der Widerstand des Friktionskontaktes Rf ist. Dieser Widerstand bestimmt den Strom Im im Frequenzbereich der Antiresonanz fa und stabilisiert ihn und damit die Bewegungsgeschwindigkeit Va des angetriebenen Elements 10.

Daraus folgt, dass bei Verwendung des erfindungsgemäßen Verfahrens zur Steuerung der Bewegungsgeschwindigkeit oder der Lage des angetriebenen Elements 10 eines Ultraschallmotors die Schwingungen des Widerstands des Friktionskontaktes Rf praktisch keine Schwingungen der Bewegungsgeschwindigkeit Va hervorrufen.

Das wiederum bedeutet, dass sich bei einer Änderung der Frequenz fu der Anregungsspannung ausgehend von der Resonanzfrequenz fr in Richtung der Antiresonanz fa bei niedrigen und extrem niedrigen Bewegungsgeschwindigkeiten Va des angetriebenen Elements 10 ein Stabilisierungseffekt für die Bewegungsgeschwindigkeit Va ausbildet. Dieser Effekt tritt umso stärker auf, je näher die Frequenz der fu der Anregungsspannung und die Antiresonanzfrequenz fa bei einander liegen.

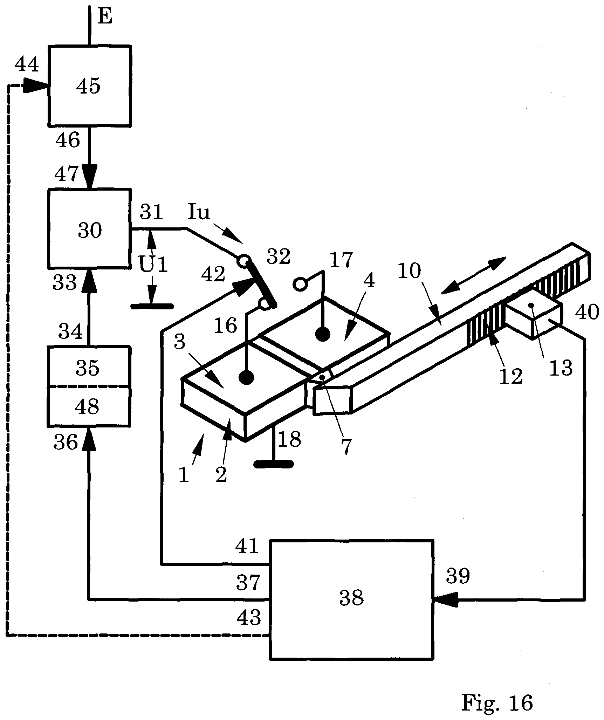

Figur 16 zeigt das elektrische Blockschaltbild für eine erfindungsgemäße Steueranordnung.

Die Schaltung weist den Leistungsverstärker 30 auf, dessen Ausgang 31 über den Umschalter 32 mit dem Eingang 16 oder 17 des Ultraschallaktors 1 verbunden ist. Der Anregungseingang 33 des Leistungsverstärkers 30 ist mit dem Ausgang 34 des unabhängigen Generators 35 verbunden. Der Eingang 36 des unabhängigen Generators 35 ist als Frequenzsteuereingang mit dem Ausgang 37 eines als Geschwindigkeits- oder Lageregler ausgeführten Reglers 38 des angetriebenen Elements 10 verbunden. Der Eingang 39 des Reglers 38 ist mit dem Ausgang 40 des Gebers oder Lagegebers 13 für die Bewegungsgeschwindigkeit oder die Lage des angetriebenen Elements 10 verbunden.

Der zweite Ausgang 41 des Reglers 38 ist mit dem Eingang 42 des Umschalters 32 der Bewegungsrichtung des angetriebenen Elements 10 verbunden. Der dritte Ausgang 43 des Reglers 38 kann mit dem Steuereingang 44 des Amplitudenreglers 45 der Anregungsspannung verbunden sein, dessen Ausgang 46 mit dem Amplitudensteuereingang 47 des Leistungsverstärkers 30 verbunden ist. Die Anregungsspannung wird durch die erste Spannung U1 bereitgestellt.

Der unabhängige Generator 35 umfasst eine Nachstimmeinrichtung 48 für die Frequenz fu der durch die erste Spannung U1 bereitgestellten Anregungsspannung. Als Bedienelement für die Nachstimmeinrichtung 48 kann ein geregelter Phasenschieber dienen, der einen elektrisch geregelten Widerstand oder einen elektrisch geregelten Kondensator enthält. Desgleichen kann ein elektrisch gesteuerter Digitalphasenschieber verwendet werden.

Der Regler 38 kann als PID-Regler der Bewegungsgeschwindigkeit oder der Lage des angetriebenen Elements 10 ausgeführt sein.

Der Umschalter 32 kann als bipolarer Transistor, als Feldeffekttransistor oder als optischer Thyristor ausgeführt sein.

Der Amplitudenregler 45 kann ein regelbarer DC-DC-Wandler für die Speisespannung E sein.

Als Geber oder Lagegeber 13 kann ein hochpräziser Laserrastergeber verwendet werden.

Nachfolgend wird der Regelprozess für die Bewegungsgeschwindigkeit des angetriebenen Elements 10 entsprechend dem vorgeschlagenen Verfahren betrachtet.

Zuerst stellt der unabhängige Generator 35 ein Signal bereit, dessen Frequenz gleich der mechanischen Resonanzfrequenz frm des Ultraschallaktors 1 ist oder in diesem Bereich liegt. Dieses Signal gelangt an den Eingang 33 des Leistungsverstärkers 30, der die erste Spannung U1 als Anregungsspannung mit der mechanischen Resonanzfrequenz frm bereitstellt. Das angetriebene Element 10 des Ultraschallmotors beginnt sich mit der maximalen Geschwindigkeit Va max zu bewegen. Der Lagegeber 13 beginnt ein Signal zu erzeugen, dass am Eingang 39 des Reglers 38 angelegt wird. Nachfolgend stellt der Regler 38 ein Signal bereit, das die Frequenz fu erhöht. Dadurch verringert sich die Bewegungsgeschwindigkeit des angetriebenen Elements 10, wodurch sich das Signal des Lagegebers 13 ändert. Die Frequenz fu erhöht sich so lange, bis die Zielgeschwindigkeit für das angetriebene Element 10 erreicht ist.

Beim Unterschreiten der Zielgeschwindigkeit des angetriebenen Elements erzeugt der Regler 38 an seinem Ausgang 41 ein die Frequenz fu verringerndes Signal. Dadurch erhöht sich die Bewegungsgeschwindigkeit des angetriebenen Elements 10. Es beginnt ein Prozess zur Aufrechterhaltung der Bewegungsgeschwindigkeit des angetriebenen Elements 10 um den Sollwert. Außerdem gilt: je kleiner die Zielgeschwindigkeit des angetriebenen Elements 10 ist, desto kleiner ist auf Grund der oben beschriebenen Gründe die Instabilität bzw. mangelnde Konstanz der Zielgeschwindigkeit.

Es kann vorteilhaft sein, wenn zum Erreichen der Sollwerte der Bewegungsgeschwindigkeit des angetriebenen Elements 10 ein zusätzlicher Amplitudenregler 45 eingesetzt wird, der die Spannungsamplitude regelt. In diesem Fall wird beim Erreichen der Zielgeschwindigkeit die Frequenzsteuerung fu unterbrochen. Danach erfolgt die Geschwindigkeitsregelung mit Hilfe des Amplitudenreglers 45 der durch die erste Spannung U1 bereitgestellten Anregungsspannung.

Bei der Lageregelung des angetriebenen Elements 10 beginnt sich das angetriebene Element 10 zu Anfang mit maximaler Geschwindigkeit in Richtung der Ziellage zu bewegen. Mit dem Erreichen der Ziellage und beim Durchlaufen dieser, erzeugt der Geber oder Lagegeber 13 ein Umschaltsignal für den Umschalter 32, wodurch sich die Bewegungsrichtung des angetriebenen Elements in der vorgegeben Richtung ändert. Es beginnt ein Prozess zur Aufrechterhaltung des angetriebenen Elements 10 in der vorgegebenen Lage. Dabei gilt: je höher die Stabilität der Bewegungsgeschwindigkeit des angetriebenen Elements 10 ist, desto genauer wird das angetriebene Element 10 in die Ziellage geführt.

In einigen Anwendungen kann zum Erreichen der Ziellage des angetriebenen Elements 10 ein zusätzlicher Amplitudenregler 45 verwendet werden, der die Amplitude der ersten Spannung U1 regelt. In diesem Fall wird beim Erreichen der Ziellage des angetriebenen Elements 10 die Steuerung der Frequenz fu unterbrochen, und die weitere Lagesteuerung erfolgt mit dem Amplitudenregler 45 der ersten Spannung U1 als Anregungsspannung.

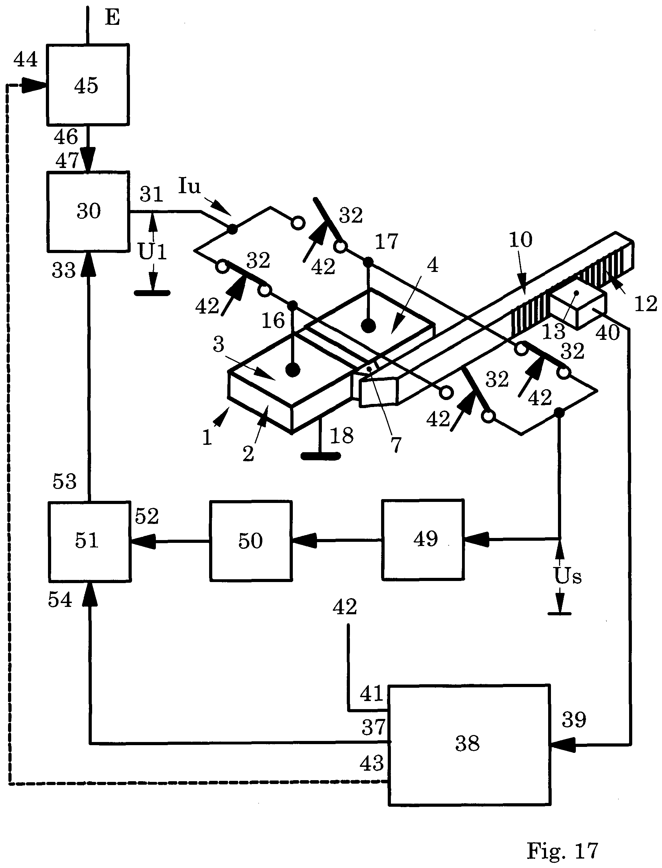

Figur 17 zeigt das Blockschaltbild für eine weitere Ausführungsform einer erfindungsgemäßen Steueranordnung.

Die Schaltung weist einen selbsterregenden Oszillator für die elektrische erste Spannung U1 als Anregungsspannung auf, in dem die Frequenz fu für die den Ultraschallaktor ansteuernde elektrische erste Spannung U1 mit Hilfe des selbsterregenden Oszillators vorgegeben wird, dessen Frequenzsteuerelement einen Geber für die mechanische Verformung des Ultraschallaktors 1 darstellt. Bei dieser Ausführungsform wird dieser Geber durch den elektrisch nicht angeregten zweiten (oder ersten) Generator 4 (oder 3) für akustische Wellen gebildet. Überdies kann auch die Zusatzelektrode oder das auf dem Ultraschallaktor 1 angeordnete Zusatzpiezoelement als solcher Geber dienen.

Die Schaltung weist eine Rückkopplung auf, die einen Filter 49, einen Phasenschieber 50 und eine Phasenachstimmeinrichtung 51 mit dem angeregten Eingang 52, dem Ausgang 53 und dem Steuereingang 54 enthält. Die Schaltung beruht auf dem Prinzip der Selbstanregung der Schaltung auf der mechanischen Resonanzfrequenz frm. Nachfolgend wird das Prinzip näher erläutert.

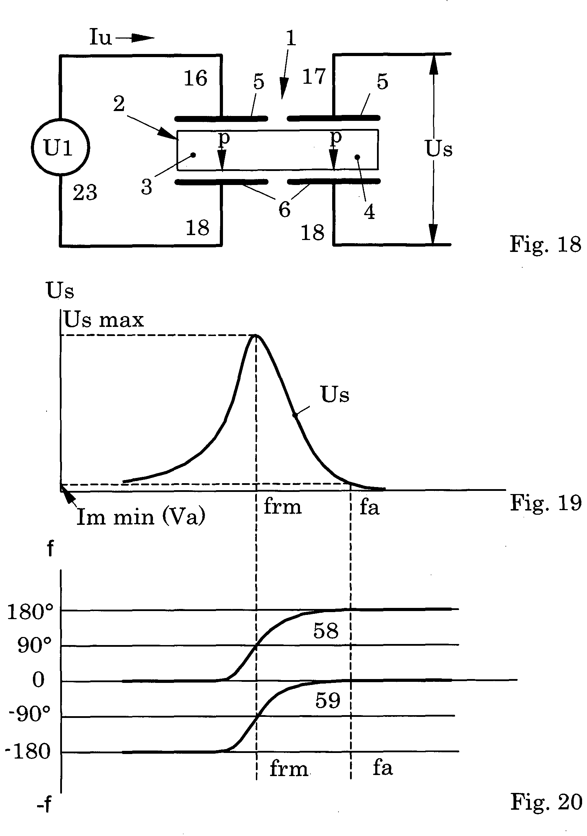

Die Figur 18 zeigt einen schematisierten Schaltplan zum Verbinden des Ultraschallaktors 1 mit der Erregervorrichtung 23. Bei Anregung des ersten Generators 3 wird an den Erregerelektroden 5 bzw. den allgemeinen Elektroden 6 des elektrisch nicht angeregten zweiten Generators 4 die elektrische Spannung Us erzeugt.

Figur 19 zeigt die Frequenzabhängigkeit der Spannung Us, während Figur 20 die Abhängigkeit der Phasenverschiebung φ zwischen der ersten Spannung U1 und der Spannung Us bei direkter (Kurve 58) und umgekehrter Verbindung (Kurve 59) der Elektroden 5, 6 zeigt.

Die Spannung Us wird über den Filter 49, den Phasenschieber 50 und die Phasennachstimmeinrichtung 51 an den Eingang 33 des Leistungsverstärkers 30 gelegt.

Der Filter 49 blockiert die hohen Oberschwingungen der Spannung Us. Der Phasenschieber für die mechanische Resonanzfrequenz frm dreht die Phase der Spannung Us von Plus auf Minus 90°. Die Phasennachstimmeinrichtung 51 kann die Phase der Spannung Us nach Plus oder nach Minus 90° verschieben. Die Phasensteuerung erfolgt mit Hilfe des Signals am Eingang 54 der Phasennachstimmeinrichtung 51.

Die Schaltung wird so abgestimmt, dass bei der mechanischen Resonanzfrequenz frm die Phasenverschiebung im Rückkopplungskreis gleich Null und der Verstärkungskoeffizient größer eins ist. Bei diesen Bedingungen schwingt die Schaltung selbständig auf der mechanischen Resonanzfrequenz frm.

Durch die Änderung der Phasenverschiebung mittels der Phasennachstimmeinrichtung 51 kann die Anregungsfrequenz der Schaltung von der mechanischen Resonanzfrequenz frm bis hin zur Resonanzfrequenz fa verändert werden. Dadurch ist es möglich, die Bewegungsgeschwindigkeit Va oder die Positionierung des Ultraschallmotors, so wie im vorhergehenden Fall gezeigt, zu steuern.

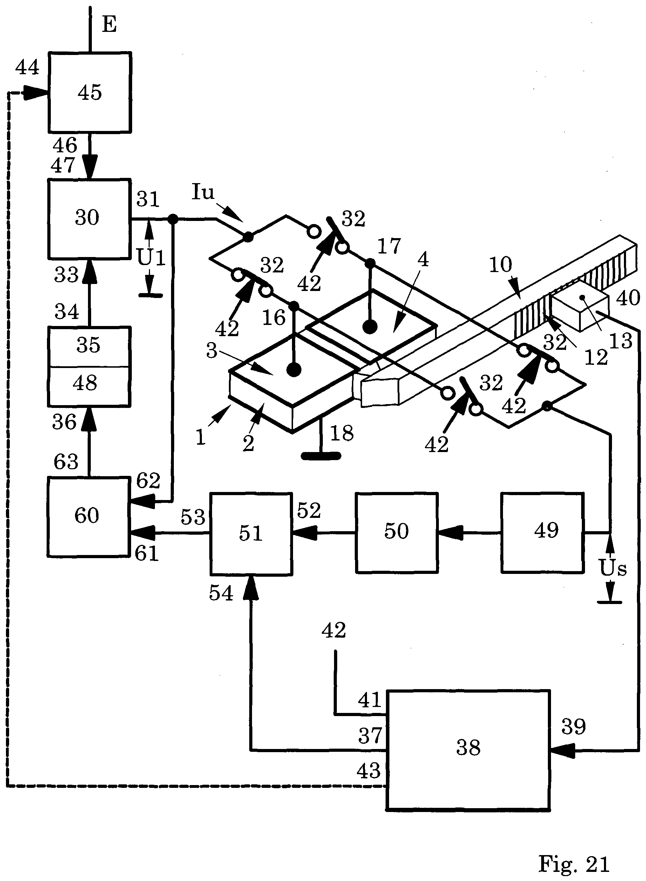

Figur 21 zeigt das Blockschaltbild einer weiteren Ausführungsform der erfindungsgemäßen Steueranordnung mit einem Phasendetektor 60 mit einem ersten Eingang als Messeingang 61, einem zweiten Eingang als Referenzeingang 62 und dem Ausgang 63. Der Phasendetektor 60 misst den Phasenverschiebungswinkel φ zwischen der ersten Spannung U1 und der Spannung Us und stellt ein Fehlersignal bereit, das die Frequenz des unabhängigen Generators 35 steuert. Die Regulierung der Frequenz des unabhängigen Generators 35 kann nach dem Prinzip der Proportionalsteuerung erfolgen. Durch Nachstimmen des Phasenverschiebungswinkels im Rückkopplungskreis kann mit der Phasennachstimmeinrichtung 51 die Bewegungsgeschwindigkeit oder die Lage des angetriebenen Elements 10 geregelt werden.

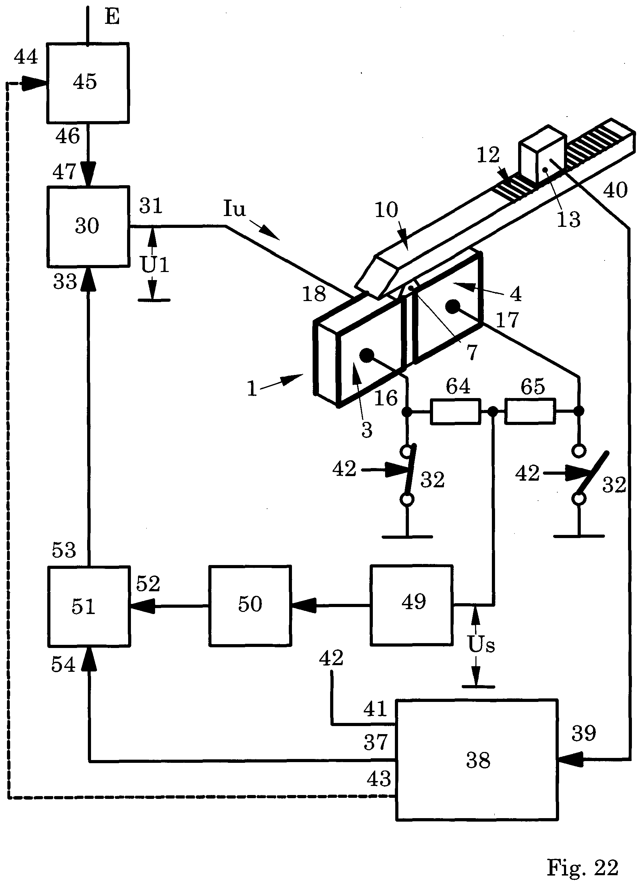

Figur 22 zeigt das Blockschaltbild einer weiteren Ausführungsform der erfindungsgemäßen Steueranordnung, in der die vom zweiten (oder ersten) Generator 4 (oder 3) erzeugte Spannung Us über den Widerstandsteiler 64, 65 an den Filter 49 des Rückkopplungskreises angelegt wird. Diese Art der Anordnung arbeitet in Analogie zur der in Figur 17 dargestellten Anordnung als selbsterregender Oszillator.

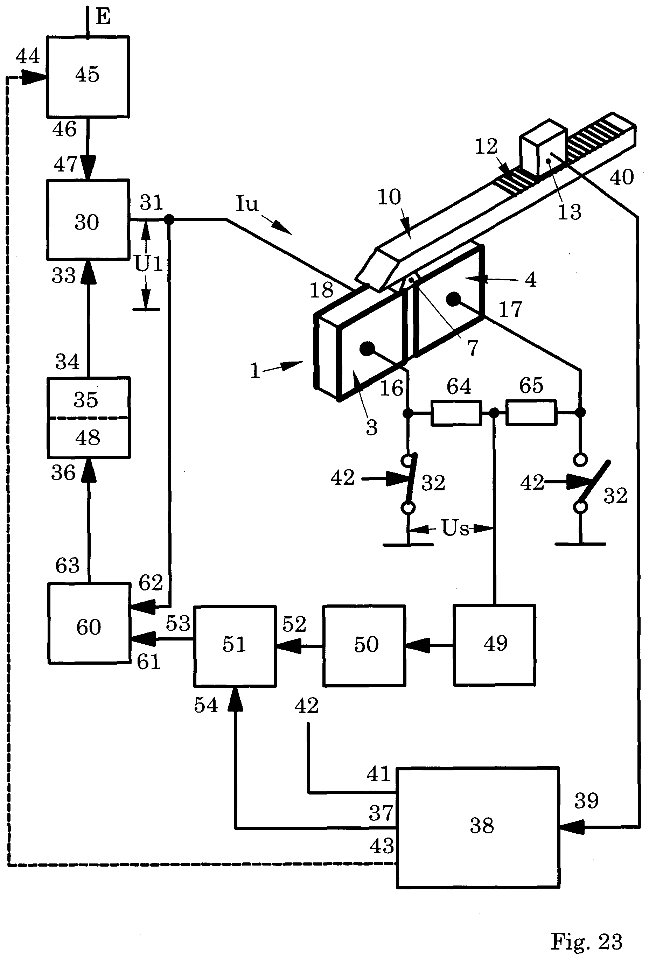

Figur 23 zeigt das Blockschaltbild einer weiteren Ausführungsform der erfindungsgemäßen Steueranordnung mit dem Widerstandsteiler 64, 65 und mit dem Phasendetektor 60. Die Anordnung funktioniert analog zu der in Figur 21 gezeigten Steueranordnung.

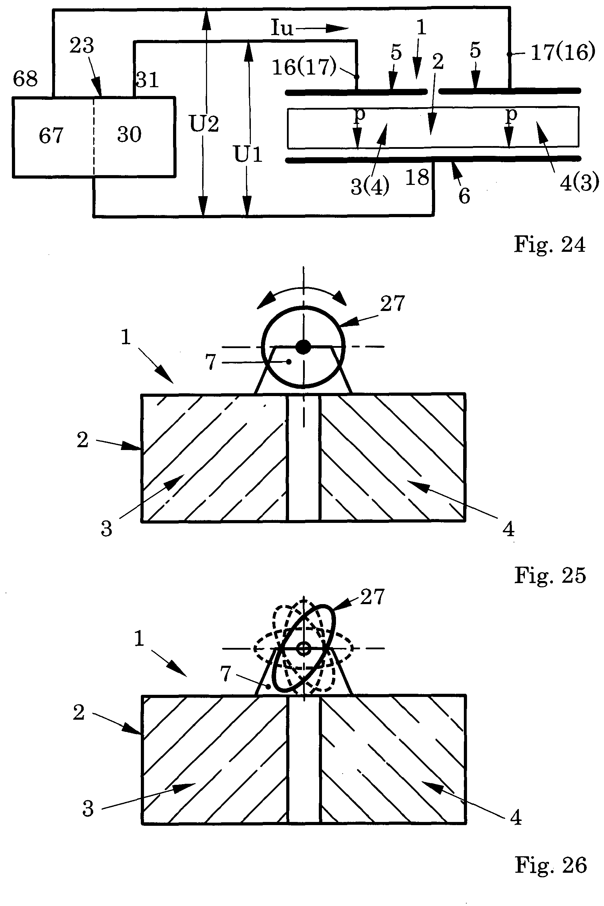

Das erfindungsgemäße Verfahren und die erfindungsgemäße Steueranordnung sieht auch eine Zweiphasenanregung des Ultraschallaktors 1 vor. In diesem Fall stellt die Erregervorrichtung 23 eine elektrische Zweiphasenspannung gleicher Frequenz fu (siehe Figur 24) mit den ersten und zweiten Spannungen U1 und U2 als Anregungsspannungen und mit einer Phasenverschiebung von 90° zwischen ihnen oder einem anderen Verschiebungswinkel bereit. Dazu weist die Erregervorrichtung 23 den zusätzlich einen Zusatzleistungsverstärker 67 mit dem Eingang 68 auf. Die Spannung U2 wird an den zweiten (oder ersten) Generator 4 (oder 3) gelegt.

Bei einer Phasenverschiebung von +/- 90° zwischen den ersten und zweiten Spannungen U1, U2 und bei gleicher Amplitude der ersten und zweiten Spannungen U1, U2 bewegt sich das Friktionselement 7 des Ultraschallaktors 1 auf einer kreisförmigen Bewegungsbahn 27 in der in Figur 25 mittels Pfeilen dargestellten einen oder anderen Richtung.

Bei der Änderung des Phasenverschiebungswinkels auf einen Wert, der größer oder kleiner als 90° ist oder bei der Änderung einer der Amplituden der ersten und zweiten Spannungen U1, U2, bewegt sich das Friktionselement 7 auf elliptischen Bewegungsbahnen, wie in Figur 26 dargestellt.

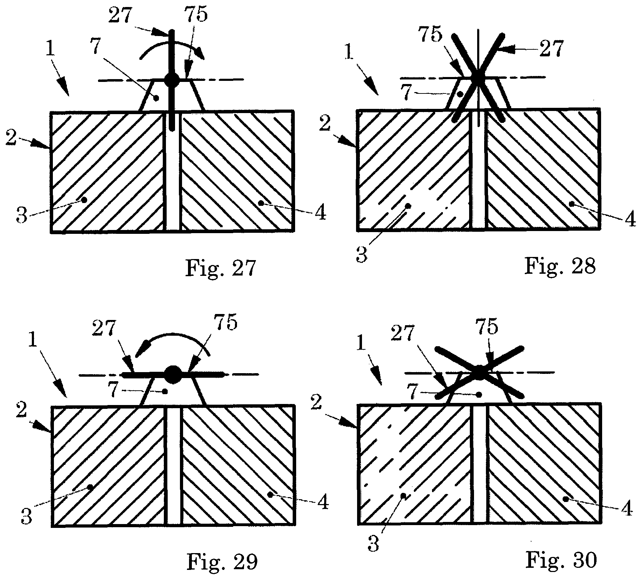

Die Figuren 27 und 29 verdeutlichen zwei Grenzfälle für die Bewegung des Friktionselementes 7.

Im ersten Fall ist der Phasenverschiebungswinkel zwischen den ersten und zweiten Spannungen U1, U2 gleich Null und die Amplitude der ersten Spannung U1 ist gleich der der zweiten Spannung U2. In diesem Fall stellt die Bewegungsbahn 27 eine senkrecht zur Friktionsoberfläche 75 des Friktionselementes 7 gerichtete Gerade dar (Figur 27).

Bei der Verringerung der Amplitude einer der ersten oder zweiten Spannung U1, U2, jeweils bezogen zur Amplitude der anderen Spannung, ist die Bewegungsbahn 27 zur Friktionsoberfläche 75, wie in Figur 28 dargestellt, geneigt.

Im zweiten Fall ist der Phasenverschiebungswinkel zwischen der ersten und der zweiten Spannung U1, U2 gleich Null und die Amplitude der ersten Spannung U1 ist gleich der der zweiten Spannung U2. In diesem Fall stellt die Bewegungsbahn 27 eine parallel zur Friktionsoberfläche 75 des Friktionselements 7 verlaufende Gerade dar (Figur 29).

Bei der Verringerung der Amplitude einer der ersten oder der zweiten Spannung U1, U2, jeweils bezogen zur Amplitude der anderen Spannung, ist die Bewegungsbahn 27 bezogen zur Friktionsoberfläche 75 umgedreht, wie in Figur 30 dargestellt.

Durch den Einsatz eines der Grenzfälle der Bewegung des Friktionselements 7 ist es möglich, die Stabilität der Bewegungsgeschwindigkeit des angetriebenen Elements 10 bei extrem niedrigen Geschwindigkeiten zu erhöhen.

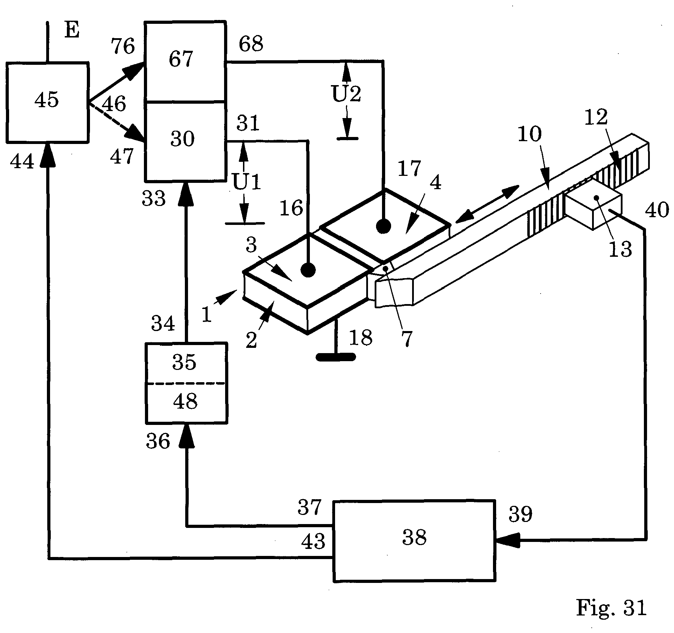

Die Figur 31 zeigt das Blockschaltbild für eine weitere Ausführungsform der erfindungsgemäßen Steueranordnung für einen Ultraschallmotor mit einer Zweiphasenanregung des Ultraschallaktors 1, welche das erfindungsgemäße Verfahren anwendet.

Die Schaltung weist den unabhängigen Generator 35, den Leistungsverstärker 30 als Hauptleistungsverstärker und den Zusatzleistungsverstärker 67 auf. Die Schaltung arbeitet analog zu der in Figur 16 dargestellten Schaltung.

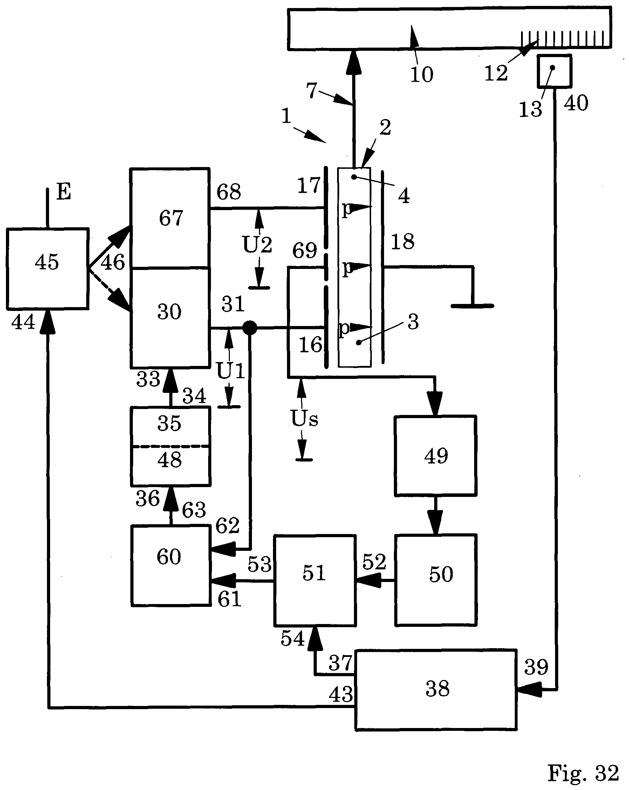

Die Figur 32 zeigt das Blockschaltbild einer weiteren Ausführungsform der erfindungsgemäßen Steueranordnung für einen Ultraschallmotor mit einer Zweiphasenanregung, in dem die Spannung Us als Rückkopplungsspannung durch die Zusatzelektrode 69 erzeugt wird. Die Schaltung arbeitet analog zu der in Figur 23 dargestellten Schaltung.

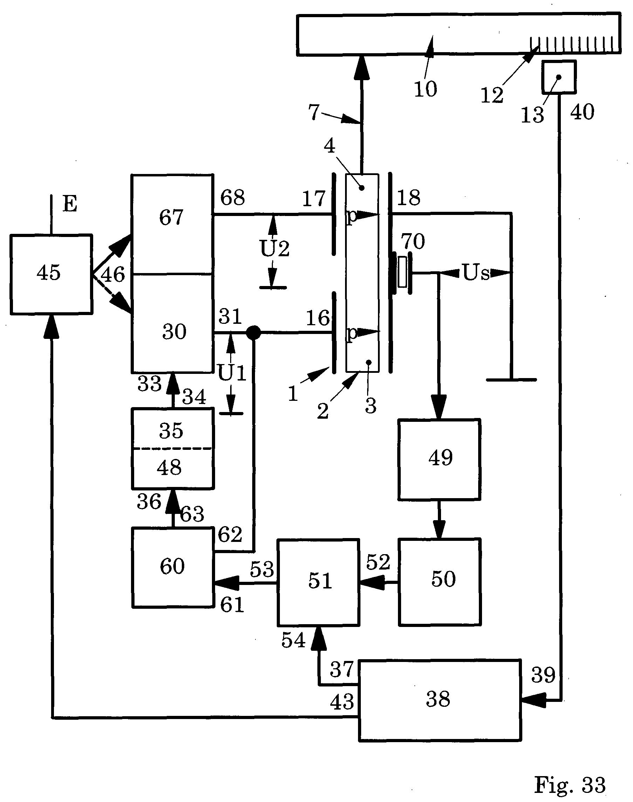

Die Figur 33 zeigt das Blockschaltbild einer weiteren Ausführungsform der erfindungsgemäßen Steueranordnung für einen Ultraschallmotor mit einer Zweiphasenanregung, in dem die Spannung Us als Rückkopplungsspannung durch ein Zusatzpiezoelement 70 erzeugt wird. Die Schaltung arbeitet analog zu der in Figur 23 dargestellten Schaltung.

Das vorgeschlagene Steuerungsverfahren für den Ultraschallmotor und die vorgeschlagene Steueranordnung ermöglichen es, auf einfache Weise die Stabilität der Geschwindigkeit des angetriebenen Elements 10 des Ultraschallmotors bei niedrigen und extrem niedrigen Bewegungsgeschwindigkeiten zu erhöhen.

Außerdem wird die Positioniergenauigkeit des angetriebenen Elements 10 des Ultraschallmotors bei niedrigen und extrem niedrigen Bewegungsgeschwindigkeiten verbessert.

Überdies ist es durch das vorgeschlagene Verfahren und die Anordnung möglich, die Herstellungstechnologie für Ultraschallmotoren zu vereinfachen, wodurch diese Motoren und die Systeme, in denen die Motoren eingesetzt werden, sich kostengünstiger gestalten.

### Bezugszeichen

- 1: Ultraschallaktor
- 2: piezoelektrische Platte
- 3: erster Generator für akustische Wellen
- 4: zweiter Generator für akustische Wellen
- 5: Erregerelektroden
- 5a: erste Erregerelektrode
- 5b: zweite Erregerelektrode
- 6: gemeinsame Elektroden
- 7: Friktionselement
- 8: Vorspannvorrichtung
- 9: Friktionsschicht
- 10: angetriebenes Element
- 10a: Antriebsoberfläche
- 10g: Grundkörper
- 11: Führungsvorrichtung
- 12: Messskala
- 13: Lagegeber
- 16: Ausgang der ersten Erregerelektrode
- 17: Ausgang der zweiten Erregerelektrode
- 18: Ausgang der allgemeinen Erregerelektrode
- 23: Erregervorrichtung
- 27: Bewegungsbahn
- 30: Leistungsverstärker
- 31: Ausgang des Leistungsverstärkers
- 32: Umschalter
- 33: Anregungseingang
- 34: Ausgang des unabhängigen Generators
- 35: unabhängiger Generator
- 36: Eingang des unabhängigen Generators
- 37: Ausgang des Reglers
- 38: Regler
- 39: Eingang des Reglers
- 40: Ausgang des Gebers
- 41: zweiter Ausgang des Reglers
- 42: Eingang des Umschalters
- 43: dritter Ausgang des Reglers
- 44: Steuereingang des Amplitudenreglers
- 45: Amplitudenregler
- 46: Ausgang des Amplitudenreglers
- 47: Amplitudensteuereingang
- 48: Nachstimmeinrichtung
- 49: Filter
- 50: Phasenschieber
- 51: Phasenachstimmeinrichtung
- 52: Eingang der Phasenachstimmeinrichtung
- 53: Ausgang der Phasenachstimmeinrichtung
- 54: Steuereingang der Phasenachstimmeinrichtung
- 58: Kurve
- 59: Kurve
- 60: Phasendetektor
- 61: Messeingang des Phasendetektors
- 62: Referenzeingang des Phasendetektors
- 63: Ausgang des Phasendetektors
- 64, 65: Widerstandsteiler
- 67: Zusatzleistungsverstärker
- 68: Eingang des Zusatzleistungsverstärkers
- 69: Zusatzelektrode
- 70: Zusatzpiezoelement
- 75: Friktionsoberfläche
- B: Betätigungsschicht
- B1: erste Längsseitenfläche
- B2: Längsseitenfläche
- Co: elektrische Kapazität
- Cm: mechanische Kapazität
- E: Sensorvorrichtung / Messvorrichtung
- fa: elektrische Antiresonanzfrequenz
- fe: elektrische Resonanzfrequenz
- fr: Resonanzfrequenz
- frm: mechanischen Resonanzfrequenz
- fu: Frequenz der elektrischen Anregungsspannung
- lu: Strom durch Aktor
- lu max: Maximum von lu
- lu min: Minimum von lu
- Im: Strom durch mechanischen Teil des Aktors
- Im max: Maximum von Im
- K: Kernschicht
- L1: Längsrichtung
- Lm: mechanische Induktivität
- M: Ultraschallmotor
- p: Polarisation
- Rm: mechanischer Verlustwiderstand im Aktor
- Rf: mechanischer Widerstand im Friktionskontakt
- U1: erste Spannung
- U2: zweite Spannung
- Us: Spannung
- Va: Bewegungsgeschwindigkeit des angetriebenen Elements
- Va max: maximalen Geschwindigkeit des angetriebenen Elements
- φ: Phasenverschiebung

## Patentansprüche

1. Verfahren zur Steuerung der Bewegungsgeschwindigkeit oder der Lage eines angetriebenen Elements (10) eines Ultraschallmotors (M) von einem ersten Stellzustand, der durch eine Startgeschwindigkeit und/oder eine Startlage des angetriebenen Elements (10) definiert ist, in einen zweiten Stellzustand, der durch eine Endgeschwindigkeit und/oder eine Endlage des angetriebenen Elements (10) definiert ist, wobei der Ultraschallmotor (M) einen Ultraschallaktor (1) mit wenigstens einem ersten und einem zweiten Generator (3, 4) für akustische Wellen umfasst, und entweder einer der Generatoren (3, 4) oder beide Generatoren (3, 4) mit einer elektrischen Anregungsspannung beaufschlagt wird oder werden, das Verfahren umfassend folgende Schritte:
- ausgehend von dem ersten Stellzustand des angetriebenen Elements (10) Einstellen der Frequenz fu der elektrischen Anregungsspannung dergestalt, dass diese gleich einer mechanischen Resonanzfrequenz frm des Ultraschallaktors (1) ist oder nahe bei dieser liegt;
- Änderung der Frequenz fu der elektrischen Anregungsspannung unter Nutzung eines Signals eines Geschwindigkeitsgebers und/oder eines Lagegebers (13) hin zu einer Antiresonanzfrequenz fa des Ultraschallaktors solange, bis der zweite Stellzustand erreicht ist;
- Regeln der Endgeschwindigkeit oder der Endlage des angetriebenen Elements (10) mit einer vorgegebenen Genauigkeit mittels gegenphasiger Frequenzänderung.

2. Verfahren nach Anspruch 1, wobei zusätzlich beim Erreichen der Endgeschwindigkeit oder der Endlage des angetriebenen Elements (10) die Geschwindigkeit oder die Lage des angetriebenen Elements (10) gesteuert wird oder mit Hilfe eines Amplitudenreglers (45) eine Spannung eingestellt wird, die einen der Generatoren (3,4) für akustische Wellen anregt.

3. Verfahren nach Anspruch 1 oder 2, wobei die Frequenz fu der elektrischen Anregungsspannung von einem unabhängigen elektrischen Generator (35) vorgegeben wird.

4. Verfahren nach Anspruch 1 oder 2, wobei die Frequenz fu der elektrischen Anregungsspannung mit einem selbsterregenden Oszillator erzeugt wird, dessen frequenzgebendes Element einen Geber für eine mechanische Verformung des Ultraschallaktors (1) darstellt.

5. Verfahren nach Anspruch 4, wobei die Änderung der Frequenz fu der elektrischen Anregungsspannung durch Einflussnahme auf die Größe der Phasenverschiebung innerhalb eines Phasenschieberelements des selbsterregenden Oszillators erfolgt.

6. Verfahren nach Anspruch 4 oder 5, wobei der selbsterregende Oszillator nach dem Prinzip der Frequenzproportionalsteuerung arbeitet.

7. Verfahren nach einem der vorhergehenden Ansprüche, wobei ein Regler (38) für die Geschwindigkeit und/oder die Lage des angetriebenen Elements (10) nach dem Prinzip der PID-Frequenzregelung arbeitet.

8. Verfahren nach Anspruch 4, wobei als Signal für den Geber für die mechanische Verformung des Ultraschallaktors (1) eine Spannung verwendet wird, die von einem elektrisch nicht erregten ersten oder zweiten Generator (3, 4) für akustische Wellen oder durch eine an dem Ultraschallaktor (1) angeordnete Zusatzelektrode (69) oder durch ein zusätzliches an dem Ultraschallaktor (1) angeordnetes Piezoelement (70) erzeugt wird.

9. Verfahren nach einem der vorhergehenden Ansprüche, wobei an jedem der ersten oder zweiten Generatoren (3, 4) für akustische Wellen eine elektrische Anregungsspannung gleicher Frequenz angelegt wird.

10. Verfahren nach Anspruch 9, wobei zwischen den an die Generatoren (3, 4) angelegten Anregungsspannungen eine Phasenverschiebung um einen beliebigen Winkel im Bereich von Null bis +/-180° besteht.

11. Verfahren nach Anspruch 9, wobei die Amplitude der an einen der Generatoren (3, 4) für akustische Wellen angelegten Anregungsspannung mit einem Amplitudenregler (45) geregelt wird.

12. Verfahren nach einem der voranstehenden Ansprüchen,
wobei die Änderung der Frequenz fu eine Änderung der Frequenz fu der ersten Spannung U1 in eine Richtung aufweist, bei der sich der Gesamtstrom lu des Ultraschallaktors bis zum Erreichen des zweiten Stellzustands des angetriebenen Elements verringert, und
wobei nach einem Ermitteln, dass das angetriebene Element den zweiten Stellzustand erreicht hat, ein Stabilhalten des zweiten Stellzustands des angetriebenen Elements durch eine Regelschleife erfolgt, bei der eine erfasste Abweichung des momentanen Stellzustands vom zweiten Stellzustand durch Veränderung eines oder beider der folgenden Maßnahmen reduziert wird:
(c1) Änderung der Frequenz der ersten Spannung U1 relativ zur Frequenz der zweiten Spannung U2,
(c2) Änderung der Amplitude der ersten Spannung U1 relativ zur Amplitude der zweiten Spannung U2.

13. Steueranordnung für einen Ultraschallmotor (M), der Ultraschallmotor (M) umfassend einen Ultraschallaktor (1) mit wenigstens einem ersten und einem zweiten Generator (3, 4) für akustische Wellen, ein angetriebenes Element (10) und einen unabhängigen Generator (35) für eine elektrische Anregungsspannung, wobei der unabhängige Generator (35) für eine elektrische Anregungsspannung eine Frequenznachführung aufweist, wobei ein Ausgang (34) des unabhängigen Generators (35) mit einem Leistungsverstärker (30) und ein Eingang (36) des unabhängigen Generators (35) mit einem Regler (38) für die Bewegungsgeschwindigkeit oder für die Lage des angetriebenen Elements (10) verbunden ist,
die Steueranordnung weiter umfassend einen Geschwindigkeitsgeber und/oder einen Lagegeber (13), wobei der Geschwindigkeitsgeber und/oder Lagegeber (13) ein Signal ausgibt,
wobei die Steueranordnung ausgehend von dem ersten Stellzustand des angetriebenen Elements (10) mit einem Einstellen der Frequenz fu der elektrischen Anregungsspannung, die gleich einer mechanischen Resonanzfrequenz frm des Ultraschallaktors (1) ist oder nahe bei dieser liegt, eine Änderung der Frequenz fu der elektrischen Anregungsspannung in Abhängigkeit des zeitlichen Bewegungsverlaufs der Längsseitenfläche B1 des Ultraschallaktors 1 unter Nutzung des von dem Geschwindigkeitsgeber und/oder dem Lagegeber (13) ausgegebenen Signals hin zur Antiresonanzfrequenz fa des Ultraschallaktors solange vornimmt, bis eine Endgeschwindigkeit oder eine Endlage des angetriebenen Elements (10) erreicht ist.

14. Steueranordnung für einen Ultraschallmotor (M) nach Anspruch 13, wobei diese zusätzlich einen Amplitudenregler (45) der elektrischen Anregungsspannung aufweist, dessen Eingang mit dem Regler (38) für die Bewegungsgeschwindigkeit oder der Lage des angetriebenen Elements (10) verbunden ist.

15. Steueranordnung für einen Ultraschallmotor (M) nach einem der Ansprüche 13 oder 14, wobei die Steueranordnung einen Phasendetektor (60) aufweist, dessen erster Eingang mit einem Geber für die mechanischen Verformungen des Ultraschallaktors (1) und dessen zweiter Eingang mit dem Ausgang (31) des Leistungsverstärkers (30) verbunden ist.

## Claims

1. Method for controlling the velocity of movement or the position of a driven element (10) of an ultrasonic motor (M) from a first adjustment state which is defined by at least one of a starting velocity or a starting position of the driven element (10) into a second adjustment state which is defined by one or both of an end velocity of the driven element (10) or an end position of the driven element (10), the ultrasonic motor (M) comprising an ultrasonic actuator (1) with at least one first and a second acoustic wave generator (3, 4), wherein one of the generators (3, 4) or both generators (3, 4) are subjected to an electrical excitation voltage, the method comprising the steps of:
- starting from the first adjustment state of the driven element (10) adjusting the frequency fu of the electrical excitation voltage such that it is equal to or close to a mechanical resonance frequency frm of the ultrasonic actuator (1);
- changing the frequency fu of the electrical excitation voltage using a signal of at least one of a velocity sensor or a position sensor (13) towards an anti-resonance frequency fa of the ultrasonic actuator until the second adjustment state is reached;
- controlling the end velocity or the end position of the driven element (10) with a predetermined accuracy by means of an antiphase frequency change.

2. The method according to claim 1, wherein in addition, when the final velocity or the end position of the driven element (10) is reached, the velocity or position of the driven element (10) is controlled or by means of an amplitude controller (45) a voltage is adjusted which excites one of the generators (3,4) for acoustic waves.

3. The method according to claim 1, wherein the frequency (fu) of the electrical excitation voltage is given by an independent electric generator (35).

4. The method according to claim 1 or 2, wherein the frequency fu of the electrical excitation voltage is generated with a self-exciting oscillator whose frequency-giving element constitutes a generator for a mechanical deformation of the ultrasonic actuator (1).

5. The method according to claim 4, wherein the change in the frequency fu of the electrical excitation voltage is effected by influencing the magnitude of the phase shift within a phase shifter element of the self-exciting oscillator.

6. The method according to claim 4 or 5, wherein the self-exciting oscillator operates on a principle of frequency proportional control.

7. The method according to one of the preceding claims, wherein a controller (38) for at least one of the velocity or the position of the driven element (10) operates on a principle of PID frequency control.

8. The method according to claim 4, wherein as signal used by the generator for the mechanical deformation of the ultrasonic actuator (1) a voltage is used which is generated by an electrically non-excited first or second acoustic wave generator (3, 4) or by an additional electrode (69) which is disposed at the ultrasonic actuator (1) or by an additional piezoelectric element (70) which is disposed at the ultrasonic actuator (1).

9. The method according to one of the preceding claims, wherein an electrical excitation voltage of the same frequency is applied to each of the first or second acoustic wave generators (3, 4).

10. The method according to claim 9, wherein between the excitation voltages applied to the generators (3, 4) there is a phase shift of any angle in the range of zero to +/- 180 °.

11. Method according to claim 9, wherein the amplitude of the excitation voltage applied to one of the acoustic wave generators (3, 4) is controlled by an amplitude controller (45).

12. The method according to one of the preceding claims,
wherein changing the frequency fu comprises a change of the frequency fu of the first voltage U1 in a direction in which the total current lu of the ultrasonic actuator decreases until reaching the second adjustment state of the driven element; and
wherein after determining that the driven element has reached the second adjustment state, maintaining the second adjustment state of the driven element stable by a control loop in which a detected deviation of the current setting state from the second adjustment state is reduced by changing one or both of the following measures:
(c1) changing the frequency of the first voltage U1 relative to the frequency of the second voltage U2;
(c2) changing the amplitude of the first voltage U1 relative to the amplitude of the second voltage U2.

13. A control arrangement for an ultrasonic motor (M), the ultrasonic motor (M) comprising an ultrasonic actuator (1) with at least a first and second acoustic wave generator (3, 4), a driven element (10) and an independent generator (35) for an electrical excitation voltage, wherein the independent generator (35) for an electrical excitation voltage comprises a frequency adjustment, wherein an output (34) of the independent generator (35) is connected to a power amplifier (30) and an input (36) of the independent generator (35) is connected to a controller (38) for the movement velocity or for the position of the driven element (10),
the control arrangement further comprising at least one of a velocity sensor or a position sensor (13), wherein the velocity sensor and/or the position sensor (13) outputs a signal, wherein the control arrangement, when starting from a first adjustment state of the driven element (10) with an adjusting the frequency fu of the electrical excitation voltage, which is equal to or close to a mechanical resonance frequency frm of the ultrasonic actuator 1, provides changing the frequency fu of the electrical excitation voltage as a function of the time course of movement of the longitudinal side surface B1 of the ultrasonic actuator using the signal of at least one of the velocity sensor or the position sensor (13) towards an anti-resonance frequency fa of the ultrasonic actuator until an end velocity or an end position of the driven element (10) is reached.

14. The control arrangement for an ultrasonic motor (M) according to claim 13, wherein the control arrangement further comprises an amplitude controller (45) of the electrical excitation voltage, the input of which is connected to controller (38) for the movement velocity or the position of the driven element (10).

15. The control arrangement for an ultrasonic motor (M) according to one of claims 13 or 14, wherein the control arrangement comprises a phase detector (60) whose first input is connected to a generator for mechanical deformations of the ultrasonic actuator (1) and whose second input is connected to the output (31) of the power amplifier (30).

## Revendications

1. Un procédé pour commander la vitesse de mouvement ou la position d'un élément entraîné (10) d'un moteur ultrasonique (M) d'un premier état de réglage qui est défini par une vitesse initiale et/ou une position initiale de l'élément entraîné (10) à un deuxième état de réglage qui est défini par une vitesse finale et/ou une position finale de l'élément entraîné (10), où le moteur ultrasonique (M) comprend un actuateur ultrasonique (1) avec au moins un premier et un deuxième générateur (3, 4) d'ondes acoustiques, et où une tension excitatrice électrique est appliquée, ou à un des générateurs (3, 4) ou aux deux générateurs (3, 4), le procédé comprenant les étapes suivantes :
- à partir du premier état de réglage de élément entraîné (10) régler la fréquence fu de la tension excitatrice électrique de sorte qu'elle est égale à une fréquence de résonance mécanique frm de l'actuateur ultrasonique (1) ou est proche de celle-ci ;
- modification de la fréquence fu de la tension excitatrice électrique en utilisant un signal d'un émetteur de vitesse et/ou d'un émetteur de position (13) vers une fréquence antirésonance fa de l'actuateur ultrasonique jusqu'à ce que le deuxième état de réglage soit atteint ;
- régler la vitesse finale ou la position finale de l'élément entraîné (10) avec une précision prédéfinie au moyen d'une modification de fréquence en opposition de phase.

2. Procédé selon la revendication 1, où en outre, lorsque la vitesse finale ou la position finale de l'élément entraîné (10) est atteinte, la vitesse ou la position de l'élément entraîné (10) est commandée ou une tension est réglée au moyen d'un régulateur d'amplitude (45) qui excite un des générateurs (3, 4) d'ondes acoustiques.

3. Procédé selon la revendication 1 ou 2, où la fréquence fu de la tension excitatrice électrique est déterminée par un générateur électrique (35) indépendant.

4. Procédé selon la revendication 1 ou 2, où la fréquence fu de la tension excitatrice électrique est générée par un oscillateur auto-excité dont l'élément déterminant la fréquence représente un émetteur pour une déformation mécanique de l'actuateur ultrasonique (1).

5. Procédé selon la revendication 4, où la modification de la fréquence fu de la tension excitatrice électrique est réalisée en influençant l'ampleur du déphasage au sein d'un élément déphaseur de l'oscillateur auto-excité.

6. Procédé selon la revendication 4 ou 5, où l'oscillateur auto-excité travaille selon le principe de la commande proportionnelle à la fréquence.

7. Procédé selon une des revendications précédentes, où un régulateur (38) pour la vitesse et/ou la position de l'élément entraîné (10) travaille selon le principe de réglage de fréquence PID.

8. Procédé selon la revendication 4, où une tension est utilisée en tant que signal pour l'émetteur pour la déformation mécanique de l'actuateur ultrasonique (1) qui est générée par un premier ou deuxième générateur (3, 4) d'ondes acoustiques non excité électriquement ou par une électrode additionnelle (69) arrangée à l'actuateur ultrasonique (1) ou par un élément piézoélectrique (70) additionnelle arrangé à l'actuateur ultrasonique (1).

9. Procédé selon une des revendications précédentes, où une tension électrique excitatrice de la même fréquence est appliquée à chacun des premiers et deuxièmes générateurs (3, 4) d'ondes acoustiques.

10. Procédé selon la revendication 9, où un décalage de phase d'un angle quelconque dans la gamme comprise entre zéro et +/- 180° existe entre les tensions excitatrices appliquées aux générateurs (3, 4).

11. Procédé selon la revendication 9, où l'amplitude de la tension excitatrice appliquée à un des générateurs (3, 4) d'ondes acoustiques est réglée par un régulateur d'amplitude (45).

12. Procédé selon une des revendications précédentes,
où la modification de la fréquence fu comprend une modification de la fréquence fu de la première tension U1 dans un sens, où le courant total lu de l'actuateur ultrasonique diminue jusqu'à l'atteinte du deuxième état de réglage de l'élément entraîné, et
où après avoir déterminé que l'élément entraîné aie atteint le deuxième état de réglage, le deuxième état de réglage de l'élément entraîné est stabilisé par un boucle de réglage, une déviation détectée entre l'état de réglage actuel et le deuxième état de réglage étant réduite par une modification selon une des actions suivantes ou selon les deux actions suivantes :
(c1) Modification de la fréquence de la première tension U1 par rapport à la fréquence de la deuxième tension U2,
(c2) Modification de l'amplitude de la première tension U1 par rapport à l'amplitude de la deuxième tension U2.

13. Ensemble de commande pour un moteur ultrasonique (M), le moteur ultrasonique (M) comprenant un actuateur ultrasonique (1) avec au moins un premier et un deuxième générateur (3, 4) d'ondes acoustiques, un élément entraîné (10) et un générateur indépendant (35) pour une tension excitatrice électrique, où le générateur indépendant (35) pour une tension excitatrice électrique comprend une poursuite de fréquence, où une sortie (34) du générateur indépendant (35) est connectée à un amplificateur de puissance (30) et où une entrée (36) du générateur indépendant (35) est connectée à un régulateur (38) pour la vitesse de mouvement ou pour la position de l'élément entraîné (10),
l'ensemble de commande comprenant en outre un émetteur de vitesse et/ou un émetteur de position (13), l'émetteur de vitesse et/ou l'émetteur de position (13) émettant un signal,
où l'ensemble de commande réalise, à partir du premier état de réglage de l'élément entraîné (10) par un réglage de la fréquence fu de la tension excitatrice électrique qui est égale à une fréquence de résonance mécanique frm de l'actuateur ultrasonique (1) ou est proche de celle-ci, une modification de la fréquence fu de la tension excitatrice électrique en fonction du déroulement temporel du mouvement de la face latéral longitudinal B1 de l'actuateur ultrasonique (1) en utilisant le signal émis par l'émetteur de vitesse et/ou l'émetteur de position (13) vers la fréquence anti-résonance fa de l'actuateur ultrasonique (1) jusqu'à ce qu'une vitesse finale ou une position finale de l'élément entraîné (10) soit atteinte.

14. Ensemble de commande pour un moteur ultrasonique (M) selon la revendication 13, où celui-ci comprend en outre un régulateur d'amplitude (45) de la tension excitatrice électrique, dont l'entrée est connectée au régulateur (38) pour la vitesse de mouvement ou la position de l'élément entraîné (10).

15. Ensemble de commande pour un moteur ultrasonique (M) selon une des revendications 13 ou 14, où l'ensemble de commande comprend un détecteur de phase (60) dont la première entrée est connectée à un émetteur pour la déformation mécanique de l'actuateur ultrasonique (1) et dont la deuxième entrée est connectée à la sortie (31) de l'amplificateur de puissance (30).
